# EUROPEAN PATENT APPLICATION

(11) **EP 4 633 110 A1**
(43) Date of publication of application: **15.10.2025**
(21) Application number: 23910750.1
(22) Date of filing: 27.12.2023
(51) Int. Cl.: H04L 47/50

(54) **QUEUE MANAGEMENT METHOD AND APPARATUS, AND NETWORK NODE**

(30) Priority: 30.12.2022 CN 202211731386
(71) Applicant: Huawei Technologies Co., Ltd., Shenzhen, Guangdong 518129 (CN)
(72) Inventor: GUO, Huajian, Shenzhen, Guangdong 518129 (CN); ZHANG, Feng, Shenzhen, Guangdong 518129 (CN); LI, Junying, Shenzhen, Guangdong 518129 (CN)
(74) Representative: Isarpatent
(86) International application number: PCT/CN2023/142440
(87) International publication number: WO 2024/140832

(57) **Abstract**

A queue management method and apparatus, and a network node are provided, and relate to the field of communication technologies, to improve SRQ performance. The network node includes a host and a network interface card. The host includes an SRQ and a plurality of QPs that share the SRQ.. The method includes: The network interface card receives a data packet of a first QP, where the first QP corresponds to a first QPC, and the first QPC includes validity information; when the validity information in the first QPC indicates that there is no available SRQE, and the production pointer and the consumption pointer that are in an SRQC are different, the network interface card obtains the SRQE corresponding to the consumption pointer in the SRQC based on the consumption pointer; and the network interface card stores the data packet based on the obtained SRQE.

## Description

This application claims priority to Chinese Patent Application No. 202211731386.4, filed with the China National Intellectual Property Administration on December 30, 2022 and entitled "QUEUE MANAGEMENT METHOD AND APPARATUS, AND NETWORK NODE", which is incorporated herein by reference in its entirety.

### TECHNICAL FIELD

This application relates to the field of communication technologies, and in particular, to a queue management method and apparatus, and a network node.

### BACKGROUND

In a network including a plurality of network nodes (network nodes), communication between different processes in a same network node or communication between processes in different network nodes is generally implemented by using a network transmission protocol. In the network transmission protocol, each link operates in full-duplex mode. Two ends of the link each have a queue pair (queue pair, QP). Each QP includes a send queue (send queue, SQ) and a receive queue (receive queue, RQ). The SQ is used to send data, and the RQ is used to receive data. A network node needs to reserve a specific data buffer (data buffer) for the RQ of each QP to receive burst traffic from a QP of a peer end. In this case, when a large quantity of links are maintained, the network node needs to reserve a large storage space to receive burst traffic.

To resolve a storage space waste caused by reserving the specific data buffer for each QP, a shared receive queue (shared receive queue, SRQ) technology emerges. Using the SRQ technology may mean that a plurality of QPs in a network node may share a same SRQ, and the plurality of QPs may receive data through the same SRQ. The SRQ may include a plurality of shared receive queue elements (shared receive queue elements, SRQEs). Each SRQE points to a reserved data buffer, and an RQ is no longer reserved for each QP. In this way, a data buffer corresponding to the RQ is further saved.

However, how a plurality of QPs in a network node share a same SRQ to ensure that the network node has high processing performance is a technical problem that needs to be urgently resolved.

### SUMMARY

This application provides a queue management method and apparatus, and a network node, to improve SRQ performance.

To achieve the foregoing objective, the following technical solutions are used in this application.

According to a first aspect, a queue management method is provided, and applied to a host. The host includes a shared receive queue SRQ and a plurality of queue pairs QPs that share the SRQ, the SRQ includes a plurality of shared receive queue elements SRQEs, the host manages the plurality of SRQEs based on a production pointer and a consumption pointer, the production pointer is used to determine a to-be-produced SRQE, and the consumption pointer is used to determine a to-be-consumed SRQE. The method includes: The host receives a first request from a network interface card, where the first request carries the consumption pointer and is used to obtain the SRQE corresponding to the consumption pointer; the first request is sent by the network interface card when the network interface card receives a first data packet of a first QP in the plurality of QPs and determines, based on validity information in a first QPC, that there is no available SRQE, and the production pointer and the consumption pointer that are in an SRQC are different; the first QPC is a context of the first QP; and the SRQC is a context of the SRQ; and the host sends the SRQE corresponding to the consumption pointer to the network interface card, where the SRQE corresponding to the consumption pointer is used to store the first data packet.

In the foregoing technical solution, the host may manage the plurality of SRQEs in the SRQ based on the production pointer and the consumption pointer, where the production pointer is used to determine the to-be-produced SRQE, and the consumption pointer is used to determine the to-be-consumed SRQE, so that the host can manage the plurality of SRQEs in an order indicated by the pointer, and the network interface card can consume the plurality of SRQEs in the order indicated by the pointer, to implement orderly management and consumption of the plurality of SRQEs, so as to improve SRQ performance.

In a possible implementation of the first aspect, the method further includes: The host sends a latest production pointer to the network interface card, where the production pointer is used to update the production pointer in the SRQC. In the foregoing possible implementation, the host sends the latest production pointer to the network interface card, so that the network interface card can determine a latest produced SRQE, to ensure that SRQE production and SRQE consumption are performed in order.

In a possible implementation of the first aspect, the host further includes an index ring for storing indexes of the plurality of SRQEs, the production pointer points to an index of the to-be-produced SRQE, and the consumption pointer points to an index of the to-be-consumed SRQE. The method further includes: The host sends, to the network interface card, a first index to which the consumption pointer points in the index ring, where the first index is the index of the SRQE corresponding to the consumption pointer. In the foregoing possible implementation, the index ring is introduced to manage the indexes of the plurality of SRQEs in the SRQ, so that the host can manage the plurality of SRQEs in an index order indicated by the pointer, and the network interface card can consume the plurality of SRQEs in the index order indicated by the pointer, to implement orderly management and consumption of the plurality of SRQEs, so as to improve SRQ performance.

In a possible implementation of the first aspect, the method further includes: The host receives a second request from the network interface card, where the second request is used to obtain n indexes to which a prefetch pointer points in the index ring, n is a positive integer, the second request is sent by the network interface card when the network interface card determines that a preset condition is met, and the preset condition includes: The prefetch pointer in the SRQC is different from the production pointer in the SRQC, and a difference between the prefetch pointer in the SRQC and the consumption pointer in the SRQC is less than a prefetch quantity in the SRQC. The host sends the n indexes to the network interface card. In the foregoing possible implementation, the host may sequentially manage the plurality of SRQEs, and the network interface card may sequentially consume the plurality of SRQEs, so that the network interface card can obtain indexes of n SRQEs through one prefetch. In this way, when the network interface card needs to consume an SRQE subsequently, the network interface card can directly read the SRQE from a cache for use, to improve SRQ performance.

In a possible implementation of the first aspect, the method further includes: The host produces a second SRQE when consumption of an SRQE is completed; the host caches the second SRQE in the SRQ based on an index of the consumed SRQE; and the host writes the index of the consumed SRQE as an index of the second SRQE into the index ring based on the production pointer, and updates the production pointer. In the foregoing possible implementation, when consumption of an SRQE is completed, the host may produce a new SRQE in the order indicated by the production pointer, to improve SRQE utilization.

In a possible implementation of the first aspect, the method further includes: The host initializes the SRQC; the host initializes the production pointer in the host; and the host produces the plurality of SQREs, and performs the following steps when producing each of the plurality of SRQEs: producing the SQRE, writing the SRQE into the SRQ, writing an index of the SRQE into the index ring based on the production pointer, and updating the production pointer. In the foregoing possible implementation, the host may initialize the plurality of SRQEs in the order indicated by the pointer, to implement orderly management of the plurality of SRQEs, so as to improve SRQ performance.

In a possible implementation of the first aspect, the method further includes: The host receives a second request from the network interface card, where the second request is used to obtain n SRQEs to which a prefetch pointer points in the SRQ, n is a positive integer, the second request is sent by the network interface card when the network interface card determines that a preset condition is met, and the preset condition includes: The prefetch pointer in the SRQC is different from the production pointer in the SRQC, and a difference between the prefetch pointer in the SRQC and the consumption pointer in the SRQC is less than a prefetch quantity in the SRQC. The host is further configured to send the n SRQEs to the network interface card. In the foregoing possible implementation, the host may sequentially manage the plurality of SRQEs, and the network interface card may sequentially consume the plurality of SRQEs, so that the network interface card can obtain the n SRQEs through one prefetch. In this way, when the network interface card needs to consume an SRQE subsequently, the network interface card can directly read the SRQE from a cache for use, to improve SRQ performance.

In a possible implementation of the first aspect, the method further includes: The host produces a second SRQE when consumption of an SRQE is completed; and the host writes the second SRQE into the SRQ based on the production pointer, and updates the production pointer. In the foregoing possible implementation, when consumption of an SRQE is completed, the host may produce a new SRQE in the order indicated by the production pointer, to improve SRQE utilization.

In a possible implementation of the first aspect, the method further includes: The host initializes at least one first parameter in the SRQC, where the at least one first parameter includes a quantity of the plurality of SRQEs that can be stored in the SRQ, the production pointer, and the consumption pointer. The host initializes at least one second parameter in the SRQ, where the at least one second parameter includes the quantity of the plurality of SRQEs that can be stored in the SRQ and the production pointer. The host produces the plurality of SQREs, and performs the following steps when producing each of the plurality of SRQEs: producing the SQRE, writing the SRQE into the SRQ based on the production pointer, and updating the production pointer. In the foregoing possible implementation, the host may initialize the plurality of SRQEs in the order indicated by the pointer, to implement orderly management of the plurality of SRQEs, so as to improve SRQ performance.

According to a second aspect, a queue management method is provided, and applied to a network interface card. The network interface card includes a context SRQC of a shared receive queue SRQ and contexts QPCs of a plurality of QPs that share the SRQ, the SRQC includes a production pointer and a consumption pointer, the production pointer is used to determine a to-be-produced SRQE, and the consumption pointer is used to determine a to-be-consumed SRQE. The method includes: The network interface card receives a first data packet, where the first data packet is a data packet of a first QP in the plurality of QPs, the first QP corresponds to a first QPC, and the first QPC includes validity information; when the validity information in the first QPC indicates that there is no available SRQE and the production pointer and the consumption pointer in the SRQC are different, the network interface card obtains the SRQE corresponding to the consumption pointer in the SRQC based on the consumption pointer; and the network interface card stores the first data packet based on the obtained SRQE.

In the foregoing technical solution, the host may manage the plurality of SRQEs in the SRQ based on the production pointer and the consumption pointer, where the production pointer is used to determine the to-be-produced SRQE, and the consumption pointer is used to determine the to-be-consumed SRQE, so that the host can manage the plurality of SRQEs in an order indicated by the pointer, and the network interface card can consume the plurality of SRQEs in the order indicated by the pointer, to implement orderly management and consumption of the plurality of SRQEs, so as to improve SRQ performance.

In a possible implementation of the second aspect, the method further includes: The network interface card reads a latest production pointer from the host, and updates the production pointer in the SRQC based on the latest production pointer. In the foregoing possible implementation, the host sends the latest production pointer to the network interface card, so that the network interface card can determine a latest produced SRQE, to ensure that SRQE production and SRQE consumption are performed in order.

In a possible implementation of the second aspect, indexes of the plurality of SRQEs are stored in an index ring, the production pointer points to an index of the to-be-produced SRQE, the consumption pointer points to an index of the to-be-consumed SRQE, and the first QPC further includes an index. That the network interface card obtains, based on the consumption pointer in the SRQC, the SRQE to which the consumption pointer points includes: The network interface card reads, from the host based on the consumption pointer in the SRQC, a first index to which the consumption pointer points in the index ring; and the network interface card reads a first SRQE corresponding to the first index from the host. In the foregoing possible implementation, the index ring is introduced to manage the indexes of the plurality of SRQEs in the SRQ, so that the host can manage the plurality of SRQEs in an index order indicated by the pointer, and the network interface card can consume the plurality of SRQEs in the index order indicated by the pointer, to implement orderly management and consumption of the plurality of SRQEs, so as to improve SRQ performance.

In a possible implementation of the second aspect, after the first index to which the consumption pointer points in the index ring is read from the host, the method further includes: The network interface card updates the validity information and the index in the first QPC based on the first index; and the network interface card updates the consumption pointer in the SRQC. In the foregoing possible implementation, the network interface card updates the validity information and the index in the first QPC and the consumption pointer in the SRQC, so that a use status of the SRQ can be accurately and effectively determined.

In a possible implementation of the second aspect, after the network interface card receives the first data packet, the method further includes: When the validity information in the first QPC indicates that there is an available SRQE, the network interface card obtains the corresponding SRQE based on an index of the SRQE included in the first QPC, and stores the first data packet. In the foregoing possible implementation, efficiency of storing the first data packet by the network interface card can be improved.

In a possible implementation of the second aspect, the SRQC further includes a prefetch pointer, and the method further includes: When a preset condition is met, the network interface card reads, from the host, n indexes to which the prefetch pointer points in the index ring, and stores the n indexes in a cache, where n is a positive integer, the SRQC further includes a prefetch quantity, and the preset condition includes: The prefetch pointer in the SRQC is different from the production pointer in the SRQC, and a difference between the prefetch pointer in the SRQC and the consumption pointer in the SRQC is less than the prefetch quantity. The network interface card updates the prefetch pointer in the SRQC based on n. In the foregoing possible implementation, the host may sequentially manage the plurality of SRQEs, and the network interface card may sequentially consume the plurality of SRQEs, so that the network interface card can obtain indexes of n SRQEs through one prefetch. In this way, when the network interface card needs to consume an SRQE subsequently, the network interface card can directly read the SRQE from a cache for use, to improve SRQ performance.

In a possible implementation of the second aspect, after the n indexes are read from the host, that the network interface card obtains, based on the consumption pointer in the SRQC, the SRQE to which the consumption pointer points includes: The network interface card reads, from the cache based on the consumption pointer in the SRQC, the index to which the consumption pointer points; and the network interface card obtains the SRQE corresponding to the index. In the foregoing possible implementation, the network interface card reads, from the cache, the index to which the consumption pointer points, and obtains the SRQE corresponding to the index, so that SRQ performance can be further improved.

In a possible implementation of the second aspect, the production pointer points to the to-be-produced SRQE, the consumption pointer points to the to-be-consumed SRQE, and the first QPC further includes an SRQE. That the network interface card obtains, based on the consumption pointer in the SRQC, the SRQE to which the consumption pointer points includes: The network interface card reads, from the host based on the consumption pointer in the SRQC, a first SRQE to which the consumption pointer points. In the foregoing possible implementation, the network interface card may consume the plurality of SRQEs in the index order indicated by the pointer, to implement orderly consumption of the plurality of SRQEs, so as to improve SRQ performance.

In a possible implementation of the second aspect, after the first SRQE to which the consumption pointer points is read from the host, the method further includes: The network interface card updates the validity information and the SRQE in the first QPC based on the first SRQE; and the network interface card updates the consumption pointer in the SRQC. In the foregoing possible implementation, the network interface card updates the validity information and the SRQE in the first QPC and the consumption pointer in the SRQC, so that a use status of the SRQ can be accurately and effectively determined.

In a possible implementation of the second aspect, after the network interface card receives the first data packet, the method further includes: When the validity information in the first QPC indicates that there is an available SRQE, the network interface card stores the first data packet based on the SRQE included in the first QPC. In the foregoing possible implementation, efficiency of storing the first data packet by the network interface card can be improved.

In a possible implementation of the second aspect, the SRQC further includes a prefetch pointer, and the method further includes: When a preset condition is met, the network interface card reads, from the host, n SRQEs to which the prefetch pointer points in the SRQ, and stores the n indexes in a cache, where n is a positive integer, the SRQC further includes a prefetch quantity, and the preset condition includes: The prefetch pointer in the SRQC is different from the production pointer in the SRQC, and a difference between the prefetch pointer in the SRQC and the consumption pointer in the SRQC is less than the prefetch quantity. The network interface card updates the prefetch pointer in the SRQC based on n. In the foregoing possible implementation, the host may sequentially manage the plurality of SRQEs, and the network interface card may sequentially consume the plurality of SRQEs, so that the network interface card can obtain the n SRQEs through one prefetch. In this way, when the network interface card needs to consume an SRQE subsequently, the network interface card can directly read the SRQE from a cache for use, to improve SRQ performance.

In a possible implementation of the second aspect, that the network interface card obtains, based on the consumption pointer in the SRQC, the SRQE to which the consumption pointer points includes: The network interface card reads, from the cache based on the consumption pointer in the SRQC, the SRQE to which the consumption pointer points. In the foregoing possible implementation, when consuming the SRQE, the network interface card may directly read the SRQE from the cache for use, to improve SRQ performance.

In a possible implementation of the second aspect, the method further includes: The network interface card discards the first data packet when the validity information in the first QPC indicates that there is no available SRQE and the production pointer and the consumption pointer in the SRQC are the same.

According to a third aspect, a queue management apparatus is provided. The apparatus includes a shared receive queue SRQ and a plurality of queue pairs QPs that share the SRQ, the SRQ includes a plurality of shared receive queue elements SRQEs, the apparatus manages the plurality of SRQEs based on a production pointer and a consumption pointer, the production pointer is used to determine a to-be-produced SRQE, and the consumption pointer is used to determine a to-be-consumed SRQE. The apparatus includes: a receiving unit, configured to receive a first request from a network interface card, where the first request carries the consumption pointer and is used to obtain the SRQE corresponding to the consumption pointer; the first request is sent by the network interface card when the network interface card receives a first data packet of a first QP in the plurality of QPs and determines, based on validity information in a first QPC, that there is no available SRQE, and the production pointer and the consumption pointer that are in an SRQC are different; the first QPC is a context of the first QP; and the SRQC is a context of the SRQ; and a sending unit, configured to send the SRQE corresponding to the consumption pointer to the network interface card, where the SRQE corresponding to the consumption pointer is used to store the first data packet.

In a possible implementation of the third aspect, the sending unit is further configured to send a latest production pointer to the network interface card, where the production pointer is used to update the production pointer in the SRQC.

In a possible implementation of the third aspect, the apparatus further includes an index ring for storing indexes of the plurality of SRQEs, the production pointer points to an index of the to-be-produced SRQE, and the consumption pointer points to an index of the to-be-consumed SRQE. The sending unit is further configured to: send, to the network interface card, a first index to which the consumption pointer points in the index ring, where the first index is the index of the SRQE corresponding to the consumption pointer.

In a possible implementation of the third aspect, the receiving unit is further configured to receive a second request from the network interface card, where the second request is used to obtain n indexes to which a prefetch pointer points in the index ring, n is a positive integer, the second request is sent by the network interface card when the network interface card determines that a preset condition is met, and the preset condition includes: The prefetch pointer in the SRQC is different from the production pointer in the SRQC, and a difference between the prefetch pointer in the SRQC and the consumption pointer in the SRQC is less than a prefetch quantity in the SRQC. The sending unit is further configured to send the n indexes to the network interface card.

In a possible implementation of the third aspect, the apparatus further includes: a processing unit, configured to produce a second SRQE when consumption of an SRQE is completed. The processing unit is further configured to cache the second SRQE in the SRQ based on an index of the consumed SRQE. The processing unit is further configured to: write the index of the consumed SRQE into the index ring as an index of the second SRQE based on the production pointer, and update the production pointer.

In a possible implementation of the third aspect, the apparatus further includes: a processing unit, configured to: initialize the SRQC; and initialize the production pointer. The processing unit is further configured to: produce the plurality of SQREs, and perform the following steps when producing each of the plurality of SRQEs: producing the SQRE, writing the SRQE into the SRQ, writing an index of the SRQE into the index ring based on the production pointer, and updating the production pointer.

In a possible implementation of the third aspect, the receiving unit is further configured to receive a second request from the network interface card, where the second request is used to obtain n SRQEs to which a prefetch pointer points in the SRQ, n is a positive integer, the second request is sent by the network interface card when the network interface card determines that a preset condition is met, and the preset condition includes: The prefetch pointer in the SRQC is different from the production pointer in the SRQC, and a difference between the prefetch pointer in the SRQC and the consumption pointer in the SRQC is less than a prefetch quantity in the SRQC. The sending unit is further configured to send the n SRQEs to the network interface card.

In a possible implementation of the third aspect, the apparatus further includes: a processing unit, configured to produce a second SRQE when consumption of an SRQE is completed. The processing unit is further configured to: write the second SRQE into the SRQ based on the production pointer, and update the production pointer.

In a possible implementation of the third aspect, the apparatus further includes: a processing unit, configured to initialize at least one first parameter in the SRQC, where the at least one first parameter includes a quantity of the plurality of SRQEs that can be stored in the SRQ, the production pointer, and the consumption pointer. The processing unit is further configured to initialize at least one second parameter in the SRQ, where the at least one second parameter includes the quantity of the plurality of SRQEs that can be stored in the SRQ and the production pointer. The processing unit is further configured to: produce the plurality of SQREs, and perform the following steps when producing each of the plurality of SRQEs: producing the SQRE, writing the SRQE into the SRQ based on the production pointer, and updating the production pointer.

According to a fourth aspect, a queue management apparatus is provided. The apparatus includes a context SRQC of a shared receive queue SRQ and contexts QPCs of a plurality of QPs that share the SRQ, the SRQC includes a production pointer and a consumption pointer, the production pointer is used to determine a to-be-produced SRQE, and the consumption pointer is used to determine a to-be-consumed SRQE. The apparatus includes: a receiving unit, configured to receive a first data packet, where the first data packet is a data packet of a first QP in the plurality of QPs, the first QP corresponds to a first QPC, and the first QPC includes validity information; an obtaining unit, configured to: when the validity information in the first QPC indicates that there is no available SRQE, and the production pointer and the consumption pointer in the SRQC are different, obtain the SRQE corresponding to the consumption pointer in the SRQC based on the consumption pointer; and a processing unit, configured to store the first data packet based on the obtained SRQE.

In a possible implementation of the fourth aspect, the obtaining unit is further configured to read a latest production pointer from the host; and the processing unit is further configured to update the production pointer in the SRQC based on the latest production pointer.

In a possible implementation of the fourth aspect, indexes of the plurality of SRQEs are stored in an index ring, the production pointer points to an index of the to-be-produced SRQE, the consumption pointer points to an index of the to-be-consumed SRQE, and the first QPC further includes an index. The obtaining unit is further configured to: read, from the host based on the consumption pointer in the SRQC, a first index to which the consumption pointer points in the index ring; and read a first SRQE corresponding to the first index from the host.

In a possible implementation of the fourth aspect, the processing unit is further configured to: update the validity information and the index in the first QPC based on the first index; and update the consumption pointer in the SRQC.

In a possible implementation of the fourth aspect, the SRQC further includes a prefetch pointer, and the apparatus further includes: The obtaining unit is further configured to: when a preset condition is met, read, from the host, n indexes to which the prefetch pointer points in the index ring, where n is a positive integer, the SRQC further includes a prefetch quantity, and the preset condition includes: The prefetch pointer in the SRQC is different from the production pointer in the SRQC, and a difference between the prefetch pointer in the SRQC and the consumption pointer in the SRQC is less than the prefetch quantity. The processing unit is further configured to store the n indexes in a cache, and update the prefetch pointer in the SRQC based on n.

In a possible implementation of the fourth aspect, the production pointer points to the to-be-produced SRQE, the consumption pointer points to the to-be-consumed SRQE, and the first QPC further includes an SRQE. The obtaining unit is further configured to read, from the host based on the consumption pointer in the SRQC, a first SRQE to which the consumption pointer points.

In a possible implementation of the fourth aspect, the processing unit is further configured to: update the validity information and the SRQE in the first QPC based on the first SRQE; and update the consumption pointer in the SRQC.

In a possible implementation of the fourth aspect, the obtaining unit is further configured to: when the validity information in the first QPC indicates that there is an available SRQE, obtain the corresponding SRQE based on an index of the SRQE included in the first QPC, and store the first data packet.

In a possible implementation of the fourth aspect, the SRQC further includes a prefetch pointer. The obtaining unit is further configured to: when a preset condition is met, read, from the host, n SRQEs to which the prefetch pointer points in the SRQ, where n is a positive integer, the SRQC further includes a prefetch quantity, and the preset condition includes: The prefetch pointer in the SRQC is different from the production pointer in the SRQC, and a difference between the prefetch pointer in the SRQC and the consumption pointer in the SRQC is less than the prefetch quantity. The processing unit is further configured to store the n SRQEs in a cache, and update the prefetch pointer in the SRQC based on n.

In a possible implementation of the fourth aspect, after reading the n indexes from the host, the obtaining unit is further configured to: read, from the cache based on the consumption pointer in the SRQC, the index to which the consumption pointer points; and obtain the SRQE corresponding to the index.

According to a fifth aspect, a queue management apparatus is provided. The queue management apparatus includes a processor and a memory, the memory stores instructions, and when the processor runs the instructions, the apparatus is enabled to perform the queue management method provided in the first aspect or any possible implementation of the first aspect.

According to a sixth aspect, a queue management apparatus is provided. The queue management apparatus includes a processor and a memory, the memory stores instructions, and when the processor runs the instructions, the apparatus is enabled to perform the queue management method provided in the second aspect or any possible implementation of the second aspect.

According to another aspect of this application, a network node is further provided. The network node includes a host and a network interface card, the host includes the queue management apparatus provided in the third aspect, any possible implementation of the third aspect, or the fifth aspect, and the network interface card includes the queue management apparatus provided in the fourth aspect, any possible implementation of the fourth aspect, or the sixth aspect.

According to another aspect of this application, a communication network is further provided. The communication network includes a plurality of network nodes, and any one of the plurality of network nodes includes the network node provided in any one of the foregoing aspects.

According to another aspect of this application, a computer-readable storage medium is further provided. The computer-readable storage medium stores instructions. When the instructions are run on a device, the device is enabled to perform the queue management method provided in the first aspect or any possible implementation of the first aspect.

According to another aspect of this application, a computer-readable storage medium is further provided. The computer-readable storage medium stores instructions. When the instructions are run on a device, the device is enabled to perform the queue management method provided in the second aspect or any possible implementation of the second aspect.

According to another aspect of this application, a computer program product is further provided. When the computer program product runs on a computer, the computer is enabled to perform the queue management method provided in the first aspect or any possible implementation of the first aspect.

According to another aspect of this application, a computer program product is further provided. When the computer program product runs on a computer, the computer is enabled to perform the queue management method provided in the second aspect or any possible implementation of the second aspect.

It may be understood that any apparatus, network node, computer storage medium, or computer program product of the queue management method provided above is configured to perform the corresponding method provided above. Therefore, for beneficial effects that can be achieved by the apparatus, the network node, the computer storage medium, or the computer program product, refer to beneficial effects of the corresponding method provided above. Details are not described herein again.

### BRIEF DESCRIPTION OF DRAWINGS

FIG. 1 is a diagram of a structure of a communication network according to an embodiment of this application;
FIG. 2 is a diagram of communication based on an SRQ technology;
FIG. 3 is a diagram of an SRQ-based network node;
FIG. 4 is a diagram of initializing an SRQ by a host;
FIG. 5 is a diagram of consuming an SRQ by a NIC;
FIG. 6 is a diagram of prefetching an SRQ by a NIC;
FIG. 7 is a diagram of producing an SRQ by a host;
FIG. 8 is a diagram of a structure of a network node according to an embodiment of this application;
FIG. 9 is a diagram of initializing an SRQ by a host according to an embodiment of this application;
FIG. 10 is a schematic flowchart of initializing an SRQ by a host according to an embodiment of this application;
FIG. 11 is a diagram of consuming an SRQ by a NIC according to an embodiment of this application;
FIG. 12 is a schematic flowchart of consuming an SRQ by a NIC according to an embodiment of this application;
FIG. 13 is a diagram of prefetching an SRQ by a NIC according to an embodiment of this application;
FIG. 14 is a schematic flowchart of prefetching an SRQ by a NIC according to an embodiment of this application;
FIG. 15 is a diagram of producing an SRQ by a host according to an embodiment of this application;
FIG. 16 is a schematic flowchart of producing an SRQ by a host according to an embodiment of this application;
FIG. 17 is a diagram of a structure of another network node according to an embodiment of this application;
FIG. 18 is another diagram of initializing an SRQ by a host according to an embodiment of this application;
FIG. 19 is another schematic flowchart of initializing an SRQ by a host according to an embodiment of this application;
FIG. 20 is another diagram of consuming an SRQ by a NIC according to an embodiment of this application;
FIG. 21 is another schematic flowchart of consuming an SRQ by a NIC according to an embodiment of this application;
FIG. 22 is another diagram of prefetching an SRQ by a NIC according to an embodiment of this application;
FIG. 23 is another schematic flowchart of prefetching an SRQ by a NIC according to an embodiment of this application;
FIG. 24 is another diagram of producing an SRQ by a host according to an embodiment of this application;
FIG. 25 is another schematic flowchart of producing an SRQ by a host according to an embodiment of this application;
FIG. 26 is a diagram of a structure of a host according to an embodiment of this application;
FIG. 27 is a diagram of a structure of another host according to an embodiment of this application;
FIG. 28 is a diagram of a structure of a network interface card according to an embodiment of this application; and
FIG. 29 is a diagram of a structure of another network interface card according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, in embodiments of this application, words such as "first" and "second" do not limit a quantity or an execution sequence.

It should be noted that, in this application, the words such as "example" or "for example" are used to represent giving an example, an illustration, or a description. Any embodiment or design scheme described as "for example" or "such as" in this application should not be interpreted as being preferable or having more advantages than another embodiment or design scheme. To be precise, use of the word like "example" or "for example" is intended to present a relative concept in a specific manner.

The technical solutions provided in this application may be applied to a communication network. The communication network may include a plurality of network nodes, and the plurality of network nodes may communicate with each other through a network. For example, the communication network may include a data center network (dater center network, DCN), a high performance computing (high performance computing, HPC) network, a cloud network, or the like. The network node in the communication network may also be referred to as a node for short. During actual application, the node may be a switch, a router, or the like.

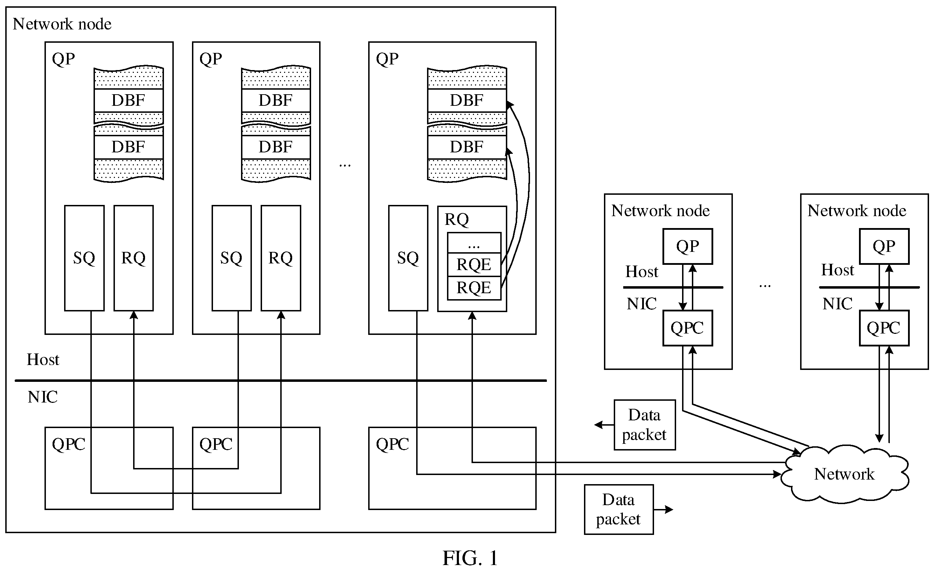

For example, as shown in FIG. 1, the communication network includes a plurality of network nodes, the plurality of network nodes are connected to each other through a network (internet), and communication between different processes in a same network node in the plurality of network nodes or communication between processes in different network nodes may be implemented by using a network transmission protocol. Each of the plurality of network nodes may include a host (host) and a network interface card (network interface card, NIC). The network interface card may also be referred to as a network adapter. The host may include a processor and a memory (memory). The memory may be a double data rate (double data rate, DDR) memory. One or more queue pairs (queue pairs, QPs) may be set in the host, and each QP may include one send queue (send queue, SQ) and one receive queue (receive queue, RQ). The SQ is used to send data, the RQ is used to receive data, and the RQ may include a plurality of receive queue elements (receive queue elements, RQEs). The NIC may store queue pair contexts (queue pair contexts, QPCs) corresponding to the one or more QPs. In other words, each QP corresponds to one QPC, and the QPC may be used to record related information of the QP.

During communication, the network node needs to reserve a specific data buffer (data buffer, DBF) for the RQ of each QP to receive burst traffic of a QP of a peer end. Each QP corresponds to one link. For example, a network node includes 1 M QPs (namely, 1 M links), 16 receive queue elements (receive queue elements, RQEs) need to be reserved for an RQ of each QP, and each RQE points to an 8 KB data buffer. In this case, a total of 128 GB (that is, 1 M*16*8 KB=128 GB) needs to be reserved. Therefore, when a quantity of QPs is large, the network node needs to reserve a large storage capacity to receive burst traffic. However, due to a limited network interface bandwidth, a quantity of links used for simultaneous transmission by the network node is small. For example, if 8 K links are active, only 1 GB (that is, 8 K*16*8 KB=1 GB) data buffer needs to be actually reserved in the memory. In this case, a storage space waste is caused.

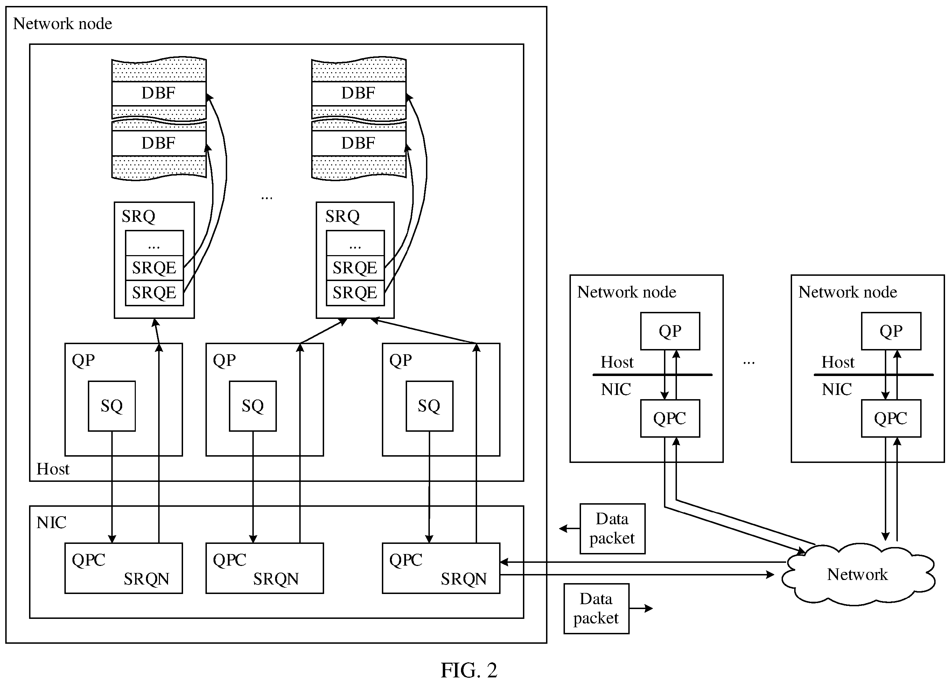

To resolve the storage space waste caused by reserving the specific data buffer for each QP, a shared receive queue (shared receive queue, SRQ) technology emerges. With reference to FIG. 1, as shown in FIG. 2, using the SRQ technology may mean that a plurality of QPs in a network node may share a same SRQ, and the plurality of QPs may receive data through the same SRQ. The SRQ may include a plurality of shared receive queue elements (shared receive queue elements, SRQEs). Each SRQE points to a reserved data buffer, and an RQ is no longer reserved for each QP. In this way, a data buffer corresponding to the RQ is further saved. Specifically, when establishing a link, the network node needs to specify an SRQ used by a current QP, and record a shared receive queue number (shared receive queue number, SRQN) of the SRQ in a corresponding QPC. When receiving a data packet from a network side, a NIC in the network node obtains an SRQE from the corresponding SRQ based on the SRQN recorded in the corresponding QPC, and stores the data packet in a data buffer indicated by the SRQE.

In the foregoing solution, if the network node has 1 M QPs, and every 128 QPs share one SRQ, 8 K SRQs are required. If each SRQ has 64 SRQEs, and each SRQE points to an 8 KB data buffer, only 4 GB (8 K*64*8 KB=4 GB) storage space needs to be reserved in the memory. This greatly reduces the storage space waste.

However, in the SRQ-based solution, a plurality of QPs that share a same SRQ sequentially apply for SRQEs from the SRQ, and report the SRQEs applied for to corresponding upper-layer software after the SRQEs are used. Because the upper-layer software of each QP has a different response speed, the upper-layer software corresponding to the plurality of QPs releases data buffers indicated by the corresponding SRQEs in an out-of-order manner.

Currently, in the related technology, the SRQ is usually managed in a linked list manner. In other words, in the related technology, the plurality of SRQEs in the SRQ are managed in the linked list manner, to concatenate the plurality of SRQEs in a form of a linked list. Specifically, when a QP applies for an SRQE, an SRQE corresponding to a head (head) of the linked list is allocated to the QP; and when a data buffer corresponding to an SRQE is released, a new data buffer is applied for, a new SRQE is constructed, and the constructed new SRQE is stored at a tail (tail) of the linked list.

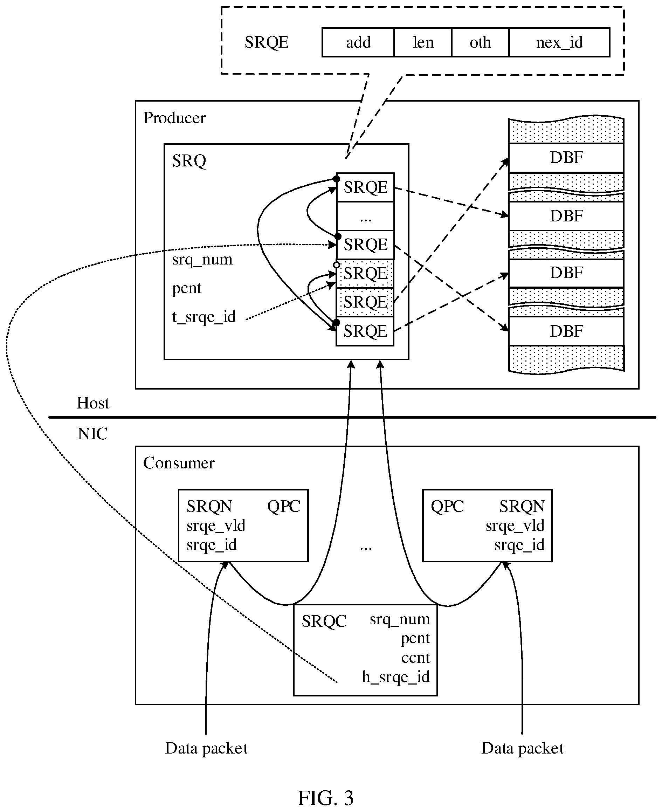

For example, as shown in FIG. 3, for any network node, a producer (producer) on a host side and a consumer (consumer) on a NIC side maintain the following information for each SRQ and each QP. The producer may include a software module (for example, a driver of a NIC) that is in a host and that is configured to manage an SRQ, and the consumer may include a software module and a hardware module that are in the NIC and that are configured to consume the SRQ.

Specifically, the producer maintains the following variables for each SRQ: srq_num, indicating a quantity of SRQEs that can be stored in the SRQ; pent, indicating a quantity of produced SRQEs, where pent++ indicates that one SRQE is produced; and t_srqe_id, indicating an index (index, id) of an SRQE at the tail of the linked list, and pointing to a next to-be-produced SRQE. The consumer maintains the following variables for each SRQ: srq_num, indicating the quantity of SRQEs that can be stored in the SRQ; pent, indicating latest pent of the SRQ that is obtained from the host; and cent, indicating a quantity of consumed SRQEs, where cent++ indicates that one SRQE is consumed. The consumer maintains the following variables for each QP: an SRQN, indicating an SRQN specified when a QP is created; srqe_vld, indicating validity of an SRQE, where when the SRQE is applied for from the SRQ, srqe_vld is set to 1 (valid), and after the SRQE is consumed, srqe_vld is set to 0 (that is, invalid); and srqe_id, indicating an index, in the SRQ, of the SRQE applied for from the SRQ. The SRQE includes the following information: address (represented as add in the figure), indicating a base address of a data buffer used to store a data packet; length (represented as len in the figure), indicating a length of the data buffer; others (represented as oth in the figure), indicating other information; and nex_id, indicating an index of a next to-be-consumed SRQE in the SRQ.

The to-be-produced SRQE in this embodiment of this application may be an SRQE to be produced by the host (or the producer) next time, namely, an SRQE that is in the SRQ and that needs to be allocated by the host (or the producer) next time. The SRQE points to a data buffer to be allocated by the host next time. The to-be-consumed SRQE in this embodiment of this application may be an SRQE to be consumed by the network interface card (or the consumer) next time, namely, an SRQE that is in the SRQ and that needs to be used by the network interface card (or the consumer) next time. The SRQE is used by the network interface card to store a data packet that is received next time and that has no available SRQE in a corresponding QPC.

In FIG. 3, the SRQE corresponding to the head of the linked list is a fourth to last SRQE (that is, h_srqe_id points to the fourth to last SRQE), and the SRQE corresponding to the tail of the linked list is a third to last SRQE (that is, t_srqe_id points to the third to last SRQE). An order of the plurality of SRQEs in the linked list is shown in FIG. 3. An example in which the NIC includes QPCs of two QPs is used for description.

The following describes specific procedures of how the host initializes the SRQ, how the NIC consumes the SRQ, how the NIC prefetches the SRQ, and how the host produces the SRQ when the SRQ is managed in the linked list manner in the related technology.

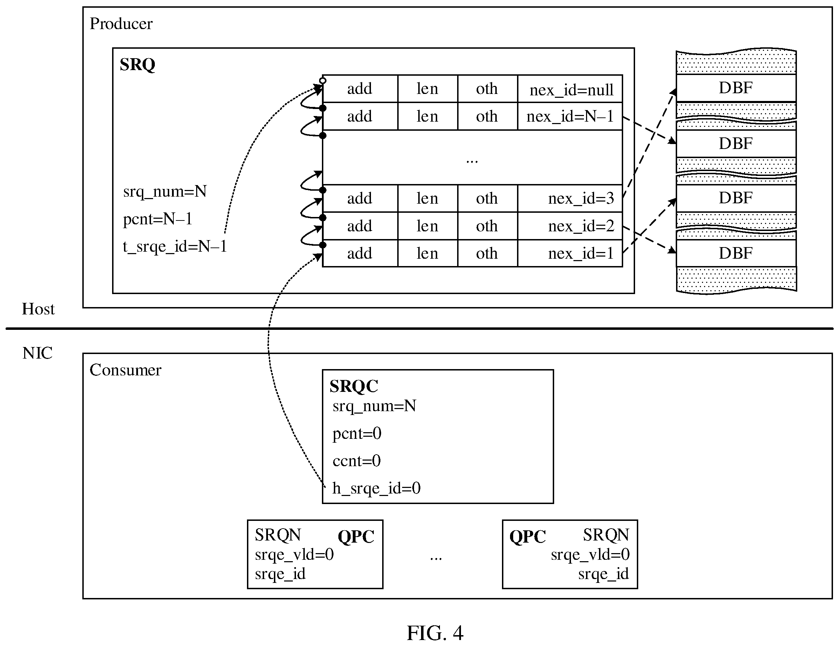

FIG. 4 is a diagram of initializing an SRQ by a host. The host first configures SRQC- and SRQ-related parameters as initial values, then applies for data buffers for a plurality of SRQEs in the SRQ based on a linked list management manner, and constructs the corresponding SRQEs until the plurality of SRQEs are constructed. With reference to FIG. 4, a specific procedure in which the host initializes the SRQ includes the following steps: S01 to S05.

S01: Initialize an SRQC on a consumer side: srq_num=N, pent=0, cent=0, and h_srqe_id=0, where h_srqe_id indicates an index of an SRQE in a head of a linked list.

S02: Initialize an SRQ variable on a producer side: srq_num=N, pcnt=0, and t_srqe_id=0, where t_srqe_id indicates an index of an SRQE at a tail of the linked list.

S03: A producer determines whether the SRQ is full; and if pcnt==(srq_num-1), that is, the SRQ is full, initialization of the SRQ is completed, and the procedure is ended; or if pcnt!=(srq_num-1), that is, the SRQ is not full, and a data buffer is applied for, "S04" continues to be performed.

S04: The producer constructs an SRQE, and stores the SRQE at a location to which t_srge_id points in the SRQ.

Herein, address in the SRQE indicates a base address of the data buffer applied for, length in the SRQE indicates a length of the data buffer applied for, and nex_id in the SRQE is equal to t_srqe_id+1.

S05: The producer updates t_srqe_id++ and pent++, and returns to "S03".

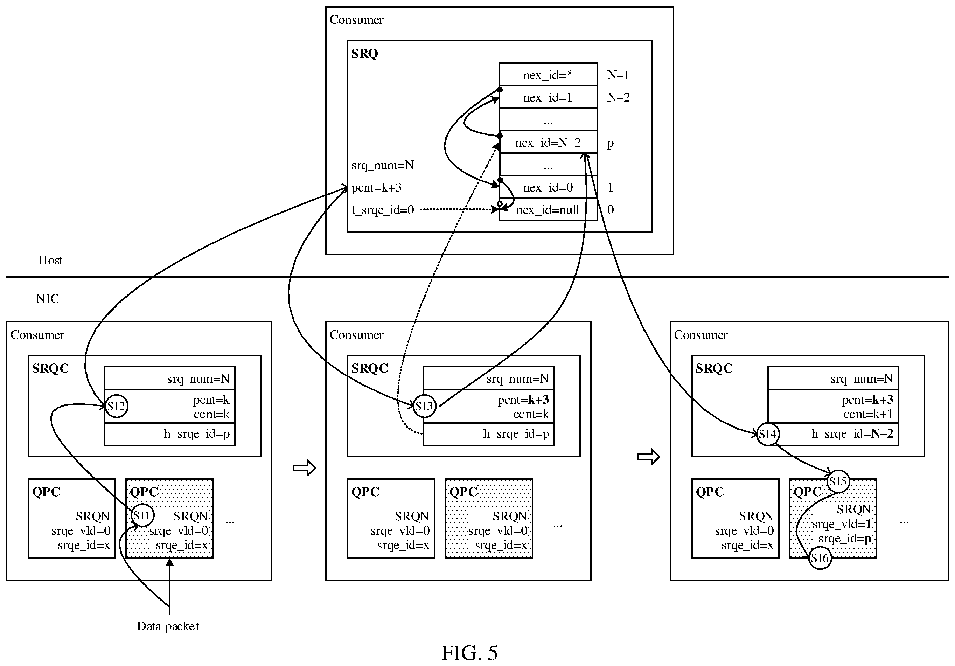

FIG. 5 is a diagram of consuming an SRQ by a NIC. Because data buffers corresponding to SRQEs on a host side are released out of order, a producer also produces the SRQEs out of order. In this case, when the NIC consumes the SRQ, a plurality of SRQEs in the SRQ are concatenated in a form of a linked list. A consumer on a NIC side starts consumption from an SRQE (namely, an SRQE indicated by h_srqe_id) in a head of the linked list. With reference to FIG. 5, when the NIC receives a data packet of a QP, a specific procedure in which the NIC consumes the SRQ includes the following steps: S11 to S16.

S11: Obtain a QPC of the QP to which the data packet belongs, determine, based on srqe_vid in the QPC, whether there is an available SRQE in the QP; and if there is an available SRQE in the QP, perform "S16" to consume the existing SRQE; or if there is no available SRQE in the QP, perform "S12" to apply for an SRQE from an SRQ associated with the QP. In FIG. 5, an example in which the QPC of the QP to which the data packet belongs is a 2^{nd} QPC, and srqe_vld in the QPC is equal to 0 (that is, there is no available SRQE) is used for description.

S12: Lock an SRQC; determine whether the SRQ is empty; and if pcnt==ccnt, that is, the SRQ is empty, read latest pent of the SRQ from a host, and continue to perform "S13"; or if pcnt!=ccnt, that is, the SRQ is not empty, read the SRQE to which h_srqe_id points, and perform "S14". In FIG. 5, an example in which pent=k and ccnt=k in SRQC, that is, pcnt==ccnt, is used for description.

S13: Update pent in the SRQC; determine whether the SRQ is empty; and if pcnt==ccnt, that is, the SRQ is empty, discard the data packet, perform corresponding processing after the data packet is discarded, and end the procedure; or if pcnt!=ccnt, that is, the SRQ is not empty, read the SRQE to which h_srqe_id points from the host, and perform "S14". In FIG. 5, an example in which the latest read pcnt=k+3 and the updated pent!=ccnt is used for description.

S14: Read the SRQE to which h_srqe_id points, allocate the SRQE to the QP that applies for the SRQE, update the SRQC, and release an SRQC lock. Updating the SRQC may include: setting h_srqe_id in the SRQC to nex_id, that is, SRQC.h_srqe_id=nex_id, and updating ccnt in the SRQC, that is, SRQC.ccnt++. In FIG. 5, an example in which h_srqe_id=p, a read SRQE to which h_srqe_id points is a p^{th} SRQE, and h_srqe_id=N-2 after the reading is used for description.

S15: Update the QPC, and perform "S16". Updating the QPC may include: setting srqe_vld in the QPC to 1, that is, QPC.srqe_vld=1; and setting srqe_id in the QPC to an index of the SRQE applied for, that is, QPC.srqe_id=the index of the SRQE applied for. In FIG. 5, an example in which srqe_vld and srqe_id in the 2^{nd} QPC are respectively updated to srqe_vld=1 and srqe_id=p is used for description.

S16: Write the data packet into the corresponding SRQE, update the QPC, and end the procedure. If the SRQE is used up, QPC.srqe_vld is set to 0 and srqe_id in the QPC is reported to the host (for example, reported to upper-layer software running on the host) through a completion event.

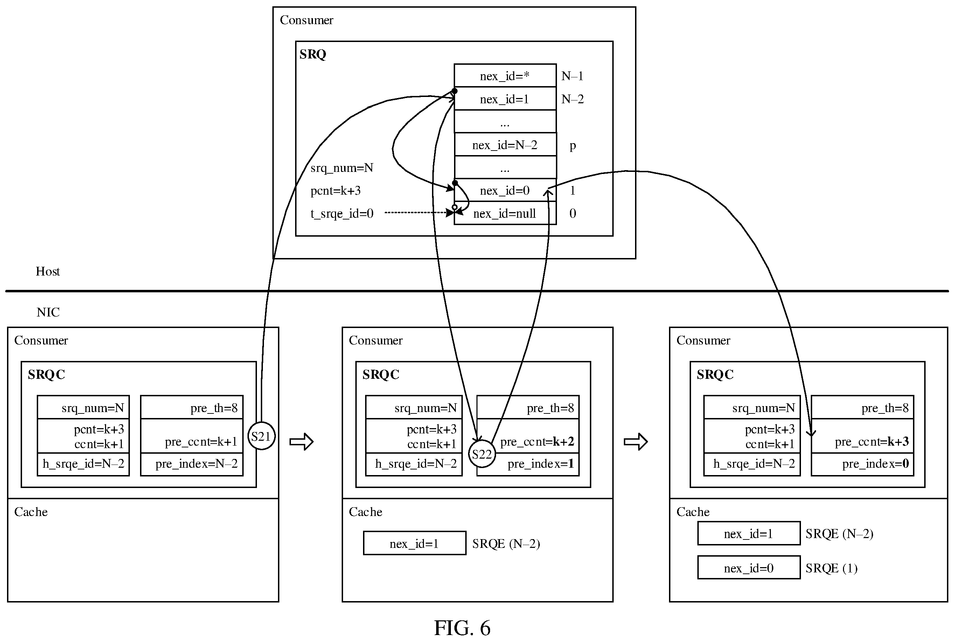

FIG. 6 is a diagram of prefetching an SRQ by a NIC. In the foregoing procedure in which the NIC consumes the SRQ, the NIC needs a round-trip time (round-trip time, RTT) to read each of the latest pcnt and h_srqe_id from the host. For example, a PCIe bus is used between the NIC and the host, and a typical RTT is 1 µs. To improve NIC performance, the NIC usually has a prefetch mechanism. To be specific, before next consumption, some consumed data is retrieved from the host to the NIC in advance and cached in the NIC. In this way, when the NIC consumes the SRQE, the SRQE can be directly hit in a cache of the NIC. Generally, performance of the prefetch mechanism is maximum performance of NIC consumption. With reference to FIG. 6, a specific procedure in which the NIC prefetches the SRQ includes the following steps: S21 and S22.

S21: Determine whether a prefetch can be initiated; and if pre_ccnt==pcnt, that is, all SRQEs produced by the host are prefetched into the cache of the NIC, stop the prefetch and end the procedure; or if (pre_ccnt-ccnt)≥pre_th, that is, a quantity of prefetched SRQEs reaches a maximum value, stop the prefetch and end the procedure; otherwise, read an SRQE to which pre_id points from the host.

Herein, pre_cent indicates a quantity of SRQEs prefetched by the NIC, pre_th indicates a maximum value of a quantity of SRQEs that can be prefetched, and pre_id indicates an index of a to-be-prefetched SRQE. In FIG. 6, an example in which pre_ccnt=k+1, pent=k+3, cent=k+1, pre_th=8, pre_id=N-2 and h_srqe_id=N-2 is used for description.

S22: The NIC reads the SRQE to which pre_id points, stores the read SRQE in the cache of the NIC, updates the SRQC, and returns to perform "S21".

Updating the SRQC may include: pre_ccnt ++; and pre_id=SRQE.nex_id (the SRQE is data read by the NIC from the host). In FIG. 6, an example in which the read SRQE is SRQE (N-2), nex_id in the SRQE (N-2) is equal to 1, and pre_id and pre_ccnt in the SRQC are respectively updated to pre_id=1 and pre_cent=k+2 is used for description.

Further, after S21 and S22 are performed again after S21 is returned to, in FIG. 6, an example in which the read SRQE is nex_id=0 SRQE (1), and pre_id and pre_cent in the SRQC are respectively updated to pre_id=0 and pre_ccnt=k+3 is used for description.

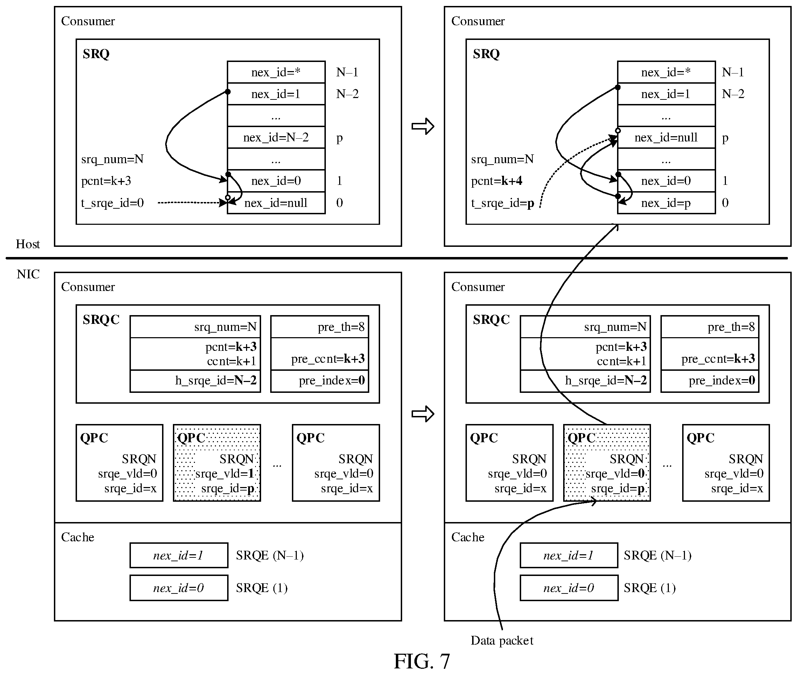

FIG. 7 is a diagram of producing an SRQ by a host. When receiving a completion event of an SRQE, the host obtains an index (for example, represented as com_srqe_id) of the SRQE, and upper-layer software running on the host uses data in a data buffer corresponding to the SRQE, and indicates the host to reclaim an SRQE space to which com_srqe_id points. In this way, the host can re-produce an SRQE. With reference to FIG. 7, a specific procedure in which the host produces the SRQ includes the following steps: S31 and S32.

S31: The host produces an idle SRQE, and stores the SRQE in an SRQ space to which t_srqe_id points, where SRQE.nex_id=com_srqe_id. In FIG. 7, an example in which srqe_vld in a 2^{nd} QPC in the NIC is updated from srqe_vld=1 to srqe_vld=0, com_srqe_id=p is reported to the host, and the host produces an idle SRQE (nex_id in the SRQE is equal to p), and stores the produced idle SRQE at a location to which t_srge_id=0 points in the SRQ, that is, the produced idle SRQE is stored at the location of a 0^{th} SRQE in the SRQ, is used for description.

S32: Update information about the SRQ, where t_srqe_id=com_srqe_id; update pent=pent+1; and end the procedure. In FIG. 7, an example in which t_srqe_id and pent in the SRQ are respectively updated to t_srqe_id=p and pent=k+4 is used for description. Herein, t_srqe_id points to a next to-be-produced SQRE. Therefore, the SQRE to which t_srqe_id points cannot be consumed.

In the foregoing manner of managing the SRQ in the linked list manner, performance of the prefetch process of the NIC is maximum consumption performance, and the following steps need to be performed in the prefetch process: locking the SRQC -> reading the SRQE to which pre_id points -> updating pre_id and pre_ccnt, and releasing the SRQC lock. If the RTT for the NIC to read data from the host is 1 µs, maximum prefetch performance of the SRQ is 1 M ops. If 128 QPs share one SRQ, average SRQE application performance of each QP is 8 K ops. A larger quantity of QPs that share a same SRQ indicates lower average SRQE application performance of each QP.

In view of this, embodiments of this application provide a queue management method, used to manage a shared receive queue SRQ. In the method, an index ring (index ring) is introduced. Indexes of a plurality of SRQEs in the SRQ are managed by using the index ring, a production pointer is used to point to an index of a to-be-produced SRQE in the index ring, and a consumption pointer is used to point to an index of a to-be-consumed SRQE in the index ring. In this way, a NIC can obtain indexes of a plurality of SRQEs through one prefetch. In this way, when the NIC needs to consume an SRQE subsequently, the NIC can directly read the SRQE from a cache for use. This improves SRQ performance.

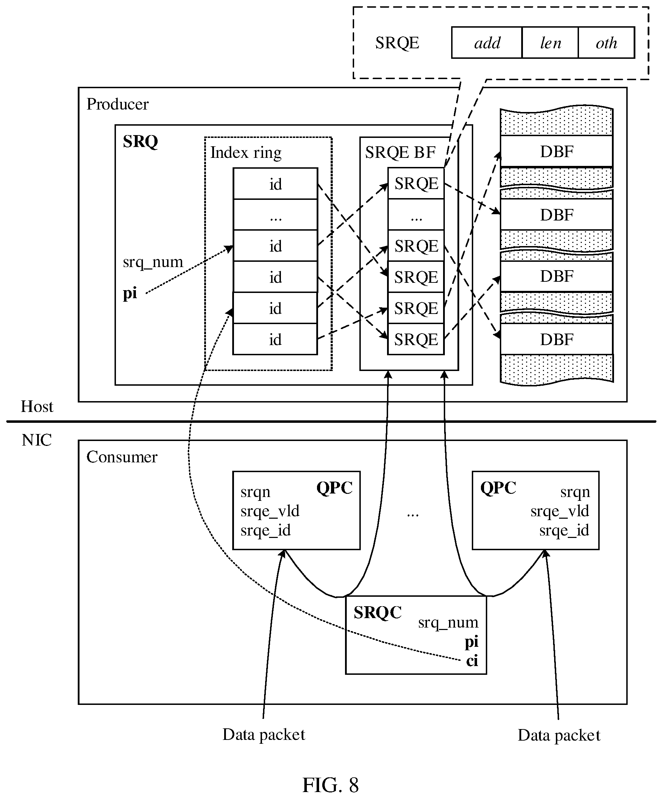

FIG. 8 is a diagram of a structure of a network node according to an embodiment of this application. The network structure includes a host and a NIC. The host and the NIC may be connected to each other through a bus. For example, the bus may include a PCIe bus. For the logic of managing an SRQ by the network node, the host may include a producer, and the NIC may include a consumer. The producer may specifically include a software module (for example, a driver of the NIC) that is in the host and that is configured to manage the SRQ, and the consumer may include a software module and a hardware module that are in the NIC and that are configured to consume the SRQ.

Each SRQ in the producer may include an index ring and an SRQE buffer (SRQE buffer, SRQE BF), and a quantity of SRQEs that can be stored in the SRQE BF is represented as srq_num. The index ring includes a plurality of entries, and each of the plurality of entries (entry) points to one SRQE in the SRQE BF. In other words, each entry may be used to store an index of one SRQE. The index ring is managed by using a production pointer pi and a consumption pointer ci, where pi points to an index of a to-be-produced SRQE, and ci points to an index of a to-be-consumed SRQE. The SRQE BF includes a plurality of SRQEs, each of the plurality of SRQEs corresponds to one data buffer (data buffer, DBF), and the data buffer DBF is used to store a data packet. Optionally, each SRQE may include a base address (address, add) of the corresponding data buffer and a length (length, len) of the corresponding data buffer, and may further include other information (others) represented as oth.

The consumer includes a QPC of each of a plurality of QPs that share a same SRQ, and the QPC is used to record related information of the corresponding QP. For example, the QPC may include an SRQN, srqe_vid, and srqe_id, where the SRQN is a number of an SRQ used by the QP, srqe_vid indicates whether the current QP has an available SRQE, and srqe_id is an index of an SRQE applied for by the current QP in an SRQE BF. The consumer also includes an SRQC of the SRQ, and the SRQC is used to maintain information required for consuming the SRQ. For example, the SRQC may include srq_num, pi, and ci, where srq_num is a quantity of SRQEs that can be stored in the SRQE BF, pi points to an index of a next to-be-produced SRQE (pi on a host side is latest, and pi on a NIC side may not be latest) of the producer, and ci points to an index of a next to-be-consumed SRQE. The consumer may further include a cache (cache), and the cache may be used to cache data, for example, used to cache an index in the index ring or an SRQE in the SRQE BF.

The following describes a specific procedure in which a host initializes an SRQ, a specific procedure in which a NIC consumes an SRQ, a specific procedure in which a NIC prefetches an SRQ, and a specific procedure in which a host produces an SRQ in the queue management method provided in embodiments of this application.

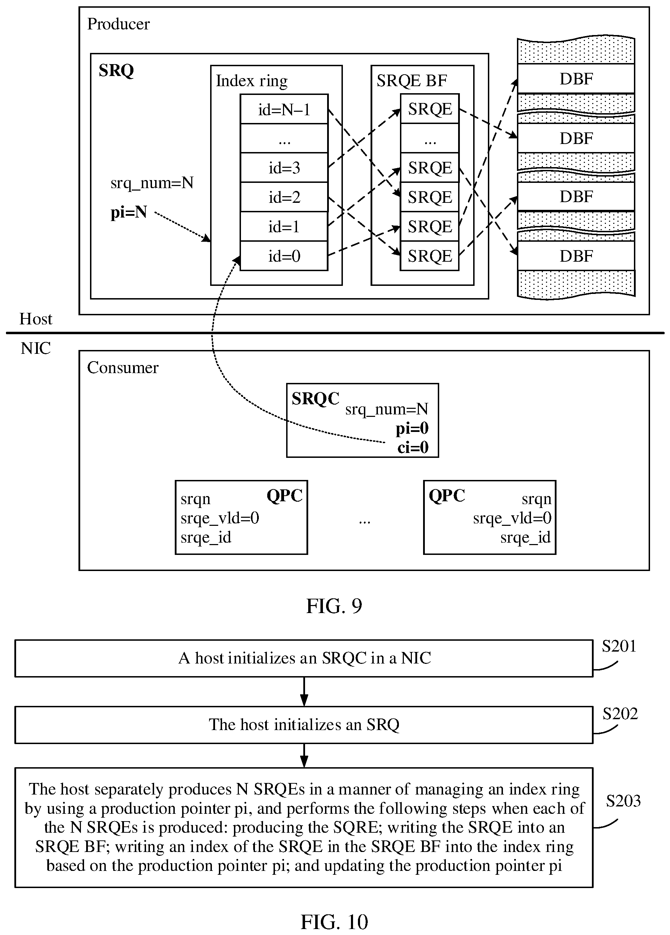

FIG. 9 is a diagram of initializing an SRQ by a host according to an embodiment of this application. The host first configures related parameters of an SRQC and the SRQ to initial values, and then applies for data buffers for a plurality of SRQEs in the SRQ by using a management manner of a production pointer pi, and constructs the corresponding SRQEs until the plurality of SRQEs are constructed. With reference to FIG. 9, as shown in FIG. 10, a specific procedure in which the host initializes the SRQ includes the following steps: S201 to S203.

S201: The host initializes an SRQC in a NIC.

The SRQC may include parameters such as a quantity srq_num of SRQEs that can be stored in a corresponding SRQE BF, the production pointer pi, and a consumption pointer ci.

In a possible embodiment, the host may send initial values of the parameters such as srq_num, pi, and ci to the NIC by using initialization information. When the NIC receives the initialization information, the NIC directly initializes the SRQC based on the initialization information, that is, configures the parameters such as srq_num, pi, and ci in the SRQC to the corresponding initial values.

Alternatively, the host stores the initial values of the foregoing parameters in a memory, and sends a corresponding storage address to the NIC by using the initialization information. When the NIC receives the initialization information, the NIC may read the initial values of the foregoing parameters based on the address, and initialize the SRQC based on the read initial values.

Optionally, an initial value of srq_num is N, an initial value of pi is 0, and an initial value of ci is 0. Initializing the SRQC in the NIC may include: performing the following initialization on the SRQC: srq_num=N, pi=0, and ci=0.

S202: The host initializes the SRQ. In a possible embodiment, the host may initialize parameters such as srq_num and pi that are related to the SRQ and that are on a host side, that is, configure the parameters such as srq_num and pi in the SRQ to corresponding initial values. Optionally, the host performs the following initialization on the related parameters of the SRQ: srq_num=N, and pi=0.

S203: The host separately produces N SRQEs in a manner of managing an index ring by using the production pointer pi.

In a possible embodiment, the following steps are performed when each of the N SRQEs is produced: producing the SQRE; writing the SRQE into an SRQE BF; writing an index of the SRQE in the SRQE BF into the index ring based on the production pointer pi; and updating the production pointer pi.

For ease of understanding, the following uses srq_num=N as an example to describe, by using the following steps S1a to S6a, a specific procedure in which the host initializes the SRQ.

S1a: Initialize an SRQC on a consumer side, where the initialization may specifically include: srq_num=N, pi=0, and ci=0.

S2a: Initialize variables on a producer side, where the initialization may specifically include: srq_num=N, and pi=0.

S3a: A producer determines whether the SRQ is full; and if pi==N, that is, the SRQ is full, initialization of the SRQ is completed, and the procedure is ended; or if pi!=N, that is, if the SRQ is not full, a data buffer is applied for, and "S4a" continues to be performed. For example, when pi=0, a data buffer DBF0 is applied for.

S4a: Construct an SRQE, and write the SRQE into the SRQE BF. Constructing the SRQE may specifically include: constructing the SRQE based on a base address and a length of the data buffer applied for and other information. For example, when pi=0, the SRQE is constructed based on the base address add0 and the length len0 of the data buffer applied for DBF0 and the other information, to obtain an SRQE to which id=0 points in FIG. 9.

S5a: The producer writes an index of the SRQE in the SRQE BF at a location to which pi points in the index ring. For example, "id=0" is written into a 1^{st} entry to which pi=0 points in the index ring.

S6a: Update pi=pi+1, and return to perform "S3a". For example, if the updated pi is equal to 1, "S3a" is returned to and performed again.

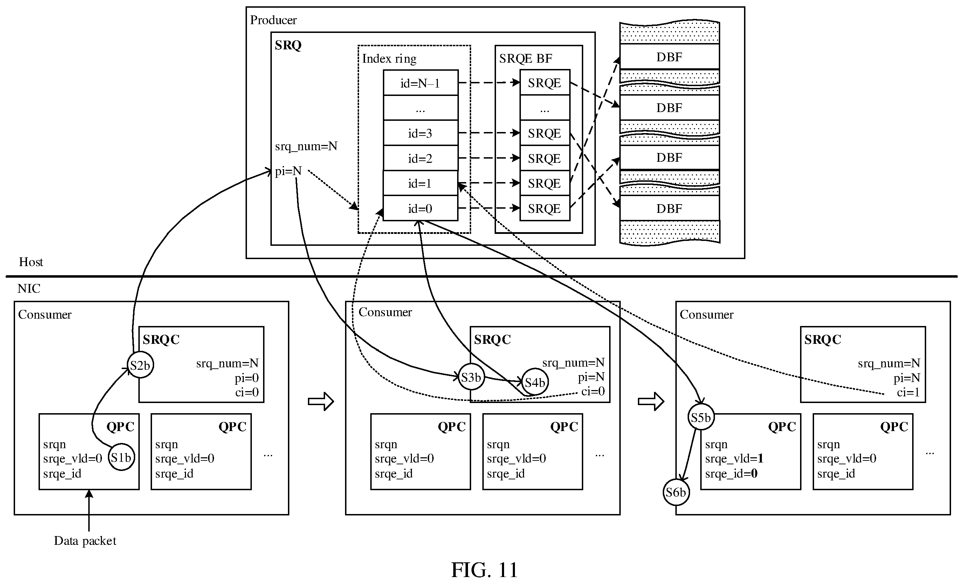

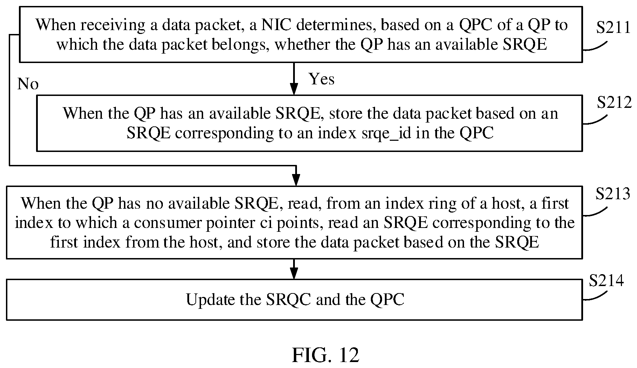

FIG. 11 is a diagram of consuming an SRQ by a NIC according to an embodiment of this application. With reference to FIG. 11, as shown in FIG. 12, when the NIC receives a data packet of a QP, a specific procedure in which the NIC consumes the SRQ includes the following steps: S211 to S214.

S211: When receiving the data packet, the NIC determines, based on a QPC of the QP to which the data packet belongs, whether the QP has an available SRQE.

In an example, the QPC may include validity information srqe_vld. The validity information srqe_vld may indicate whether there is an available SRQE. For example, when srqe_vld=1, it may indicate that there is an available SRQE; or when srqe_vld=0, it may indicate that there is no available SRQE.

Optionally, the QPC may further include an index srqe_id. The index srqe_id may indicate an index of an SRQE allocated to the QP corresponding to the QPC. When the validity information srqe_vld indicates that there is an available SRQE, the index srqe_id indicates the available SRQE.

S212: When the QP has an available SRQE, store the data packet based on the SRQE corresponding to the index srqe_id in the QPC. Further, when the network interface card does not store the SRQE corresponding to the index srqe_id, the network interface card may alternatively obtain the corresponding SRQE from the index ring in the host based on the index srqe_id in the QPC.

S213: When the QP has no available SRQE, read, from the index ring in the host, a first index to which the consumer pointer ci points, read an SRQE corresponding to the first index from the host, and store the data packet based on the SRQE.

In a possible embodiment, when the QP has no available SRQE, the NIC may determine whether the production pointer pi and the consumption pointer ci in the SRQC are the same. When the production pointer pi and the consumption pointer ci in the SRQC are different, the NIC performs S213.

For example, the NIC sends a first request to the host, where the first request carries the consumption pointer ci, and the first request is used to obtain the SRQE corresponding to the consumption pointer ci. When the host receives the first request, the host sends, to the NIC, the first index to which the consumption pointer ci points. Then, the NIC may send, to the host, a request used to obtain the SRQE corresponding to the first index, to read the SRQE corresponding to the first index from the host, and store the data packet based on the SRQE.

S214: Update the SRQC and the QPC. Optionally, after reading the first index from the host, the NIC may update the consumption pointer ci in the SRQC and the index srqe_id and the validity information srqe_vld in the QPC. In an example, the consumer pointer ci in the SRQC is updated based on ci=ci+1, the index srqe_id in the QPC is updated to the first index, and the validity information srqe_vld in the QPC is updated to srqe_vld=1.

Further, the method may further include: When the production pointer pi and the consumption pointer ci in the SRQC are the same, the NIC reads a latest production pointer pi from the host, updates the latest production pointer pi to the SRQC, and then determine whether the updated production pointer pi and the consumption pointer ci in the SRQC are different. If the updated production pointer pi and the consumption pointer ci are the same, the data packet is discarded. If the updated production pointer pi and the consumption pointer ci are different, the SRQE corresponding to ci is read from the host, and the data packet is stored based on the obtained SRQE. Optionally, in a process of reading the SRQE corresponding to ci from the host and storing the data packet, the NIC may further update ci in the SRQC (for example, ci=ci+1), and update srqe_vld and srqe_id in the QPC.

For ease of understanding, the following uses srq_num=N as an example to describe, by using the following steps S1b to S6b, a specific procedure in which the NIC consumes the SRQ.

S1b: The NIC receives a data packet from a network side, and reads a QPC of a QP to which the data packet belongs; and if srqe_vld==1, that is, the current QP has an available SRQE, obtains the SRQE, and performs "S6b"; or if srqe_vld==0, that is, the current QP has no available SRQE, performs "S2b". In FIG. 11, an example in which the QPC is a 1^{st} QPC in the NIC and srqe_vld==0 is used for description.

S2b: Lock the SRQC; determine, based on pi and ci, whether the SRQ is empty; and if ci==pi, that is, the SRQ is empty, read latest pi of the SRQ from the host, and perform "S3b"; or if ci!=pi, that is, the SRQ is not empty, read an index to which ci points in the index ring from the host, and perform "S4b". In FIG. 11, an example in which ci==pi and the latest pi=N of the SRQ is read from the host is used for description.

S3b: Update pi in the SRQC; determine, based on pi and ci, whether the SRQ is empty; and if ci==pi, that is, the SRQ is empty, discard the data packet, perform corresponding processing after the packet is discarded, and end the procedure; or if ci!=pi, that is, the SRQ is not empty, read the index to which ci points in the index ring from the host, and perform "S4b". In FIG. 11, an example in which pi in the SRQC is updated to pi=N, ci! after the update is equal to pi, and the index "id=0" to which ci points in the index ring is read from the host is used for description.

S4b: Read the index to which ci points in the index ring, allocate the index to the QP that applies for the SRQE, update the SRQC, and release an SRQC lock: ci=ci+1. In FIG. 11, an example in which "id=0" is allocated to a QP corresponding to a 1^{st} QPC in the NIC and ci in the SRQC is updated to ci=1 is used for description.

S5b: Update the QPC, and perform "S6b": QPC.srqe_vid=1; and QPC.srqe_id=the read index. In FIG. 11, an example in which srqe_vld in the 1^{st} QPC in the NIC is updated to srqe_vld=1 and srqe_id is updated to srqe_id=0 is used for description.

S6b: Write the data packet into a data buffer to which the SRQE corresponding to srqe_id in the QPC points, update the QPC, and end the procedure. Updating the QPC may include: if the SRQE is not used up, keeping srqe_vld=1; or if the SRQE is used up, setting srqe_vld to 0, and reporting srqe_id in the QPC to the host through an event.

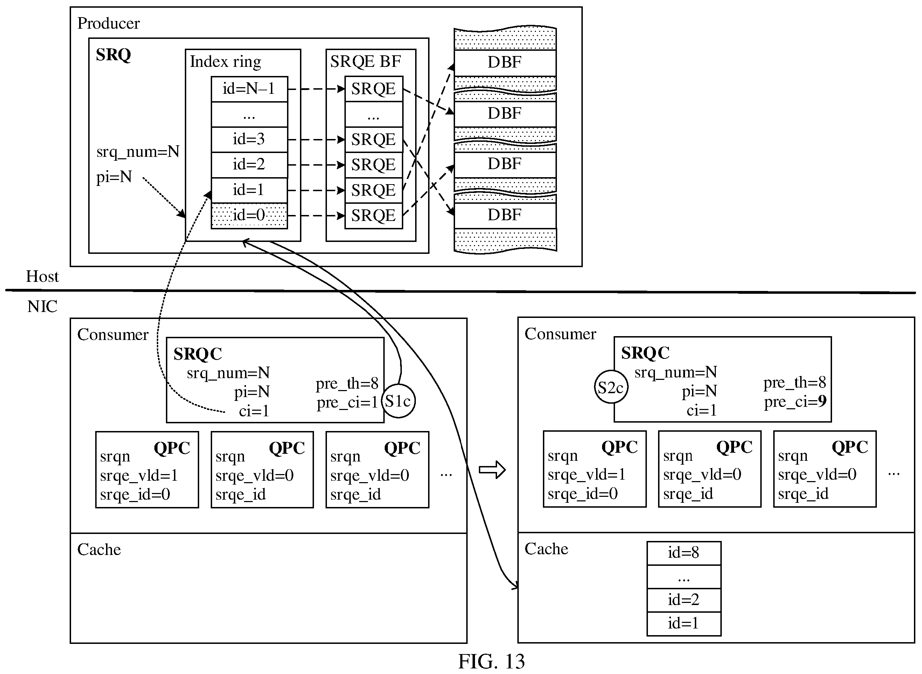

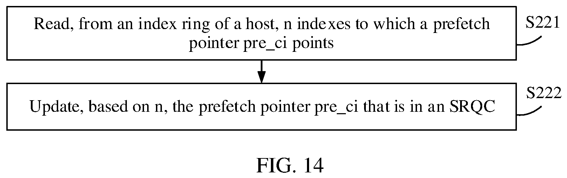

FIG. 13 is a diagram of prefetching an SRQ by a NIC according to an embodiment of this application. In the foregoing procedure in which the NIC consumes the SRQ, each time the NIC reads data from the host, a round trip time RTT is required. For example, a PCIe bus is used between the NIC and the host, and a typical RTT is 1 µs. To improve NIC performance, the NIC usually has a prefetch mechanism. To be specific, before next consumption, some consumed data is retrieved from the host to the NIC in advance and cached in the NIC. In this way, when the NIC consumes the SRQE, the SRQE can be directly hit in a cache of the NIC. With reference to FIG. 13, as shown in FIG. 14, a specific procedure in which the NIC prefetches the SRQ includes the following steps: S221 and S222.

S221: The NIC reads, from an index ring in the host, n indexes to which a prefetch pointer pre_ci points.

The n indexes may include one or more indexes, that is, a value of n may be equal to 1 or greater than 1. Optionally, an SRQC further includes a prefetch quantity pre_th and the prefetch pointer pre_ci.

In a possible embodiment, when the prefetch pointer pre_ci in the SRQC is different from a production pointer pi in the SRQC, and a difference between the prefetch pointer pre_ci in the SRQC and a consumer pointer ci in the SRQC is less than the prefetch quantity pre_th, the NIC reads, from the index ring in the host, the n indexes to which the prefetch pointer pre_ci points.

For example, the NIC sends a second request to the host, where the second request carries the prefetch pointer pre_ci, and the second request is used to obtain the n indexes corresponding to the prefetch pointer pre_ci. When the host receives the second request, the host sends, to the NIC, the n indexes to which the prefetch pointer pre_ci points. Then, the NIC may further send, to the host, a request used to obtain SRQEs corresponding to the n indexes, to read, from the host, the SRQEs corresponding to the n indexes.

S222: The NIC updates the prefetch pointer pre_ci in the SRQC based on n. Optionally, the NIC determines a sum of pre_ci and n as updated pre_ci.

Optionally, the NIC may concurrently prefetch the indexes from the index ring in the host by using S221 and S222, to further improve SRQ performance. In addition, after prefetching the plurality of indexes from the index ring in the host, the NIC may further prefetch the corresponding SRQEs from the SRQ in the host based on the plurality of indexes, to reduce a data packet processing delay and improve processing efficiency.

For ease of understanding, the following uses srq_num=N, pi=N, pre_th=8, ci=1, and pre_ci=1 as an example to describe, by using the following steps S1c and S2c, a specific procedure in which the NIC prefetches the SRQ. Herein, pre_ci points to an index of an SRQE to be prefetched by the NIC, and pre_th indicates a maximum value of an index that can be prefetched.

S1c: Determine whether a prefetch can be initiated; and if pre_ci==pi, that is, all indexes in the index ring produced by the host have been prefetched to the cache of the NIC, stop the prefetch and end the procedure; or if (pre_ci-ci)≥pre_th, that is, the prefetch quantity has reached the maximum value, stop the prefetch and end the procedure; otherwise, sequentially prefetch the n indexes to which pre_ci points from the index ring in the host, where n is a positive integer and is less than or equal to pre_th. In FIG. 13, an example in which pre_ci is not equal to pi, a difference between pre_ci and ci is less than pre_th, the NIC sequentially prefetches eight indexes (that is, n=8) from the index ring in the host, and the eight indexes include id=1 to id=8 is used for description.

S2c: Update the SRQC, and return to "S1c": pre_ci+=n. In FIG. 13, an example in which n=8 and updated pre_ci in the SRQC is equal to 9 is used for description.

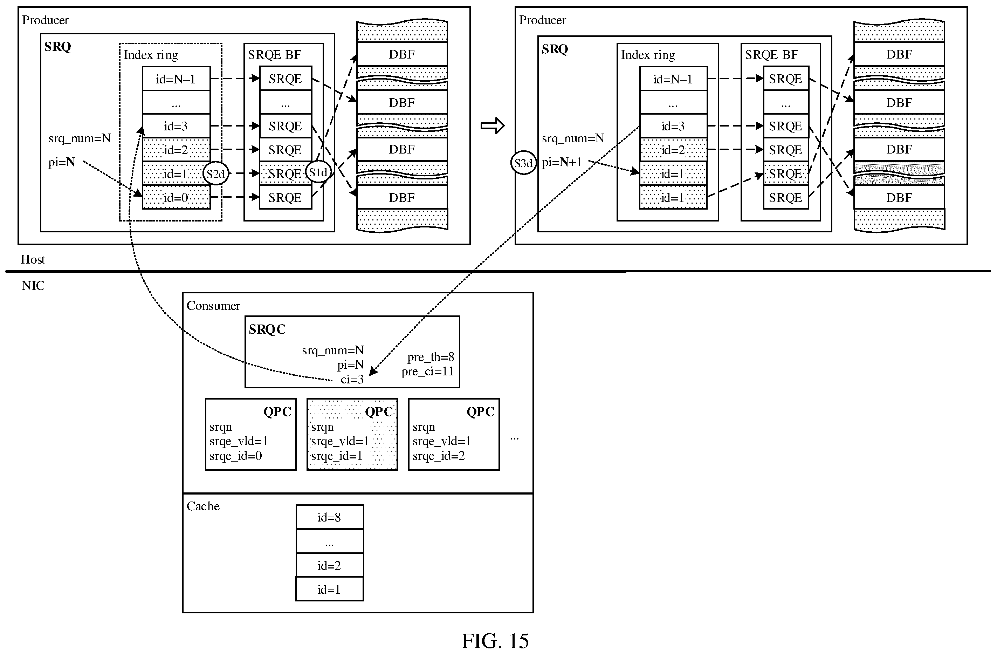

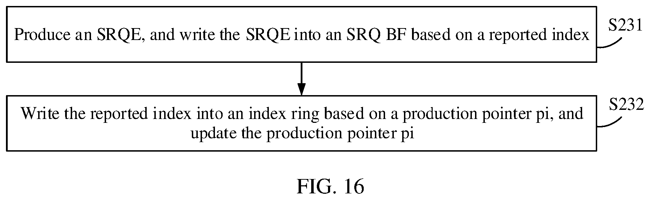

FIG. 15 is a diagram of producing an SRQ by a host according to an embodiment of this application. When receiving a completion event indicating an SRQE, the host obtains a reported index com_srqe_id in the completion event, and upper-layer software running on the host uses data in a data buffer corresponding to the SRQE, and indicates the host to re-produce an SRQE after the SRQE to which the com_srqe_id points is reclaimed. With reference to FIG. 15, as shown in FIG. 16, a specific procedure in which the host produces the SRQ includes the following steps: S231 to S233.

S231: Produce the SRQE, and write the SRQE into an SRQ BF based on the reported index. The reported index may be an index in the completion event received by the host, namely, an index of the reported consumed SRQE.

S232: Write the reported index into an index ring based on a production pointer pi, and update the production pointer pi. Optionally, updating the production pointer pi may include: pi=pi+1.

For ease of understanding, the following uses srq_num=N, pi=N, pre_th=8, ci=3, and pre_ci=11 as an example to describe, by using the following steps S1d and S3d, a specific procedure in which the host produces the SRQ.

S1d: Produce an idle SRQE, and store the SRQE in an SRQ data buffer to which the reported index com_srqe_id points. In FIG. 15, an example in which the reported index com_srqe_id is specifically id=1 is used for description.

S2d: Write the reported index com_srqe_id at a location to which pi points in the index ring. In FIG. 15, an example in which id=1 is written at the location to which pi=N points in the index ring is used for description.

S3d: Update pi=pi+1, and end the procedure. In FIG. 15, an example in which updated pi=N+1 is used for description.

In the embodiment in which the NIC consumes the SRQ provided in embodiments of this application, the host manages the plurality of SRQEs in the SRQ by using the production pointer pi, the consumption pointer ci, and the index ring, the production pointer pi points to an index of a to-be-produced SRQE, and the consumption pointer ci points to an index of a to-be-consumed SRQE. The NIC may consume and prefetch, for consumption, the plurality of SRQEs by using the consumption pointer ci based on an order of indexes of the plurality of SRQEs in the index ring. In addition, indexes of a plurality of SRQEs can be obtained through one prefetch. In this way, when the NIC needs to consume an SRQE subsequently, the NIC can directly read the SRQE from the cache for use. This improves SRQ performance.

According to another aspect, an embodiment of this application further provides another queue management method, used to manage a shared receive queue SRQ. In the method, a production pointer pi and a consumption pointer ci are used to manage an SRQE BF, the production pointer pi points to a to-be-produced SRQE, and the consumption pointer ci points to a to-be-consumed SRQE. In this way, a NIC can obtain a plurality of SRQEs through one prefetch. In this way, when the NIC needs to consume an SRQE subsequently, the NIC can directly read the SRQE from a cache for use. This improves SRQ performance. Differences between the method and the queue management method described in FIG. 8 to FIG. 16 lie in that the production pointer pi directly points to the to-be-produced SRQE instead of pointing to an index of the to-be-produced SRQE; and a QPC in the NIC stores an SRQE applied for instead of an index of the SRQE applied for. A purpose of storing the SRQE applied for is to release a space in the SRQE BF on a producer side, so that a producer can sequentially produce SRQEs in the SRQE BF.

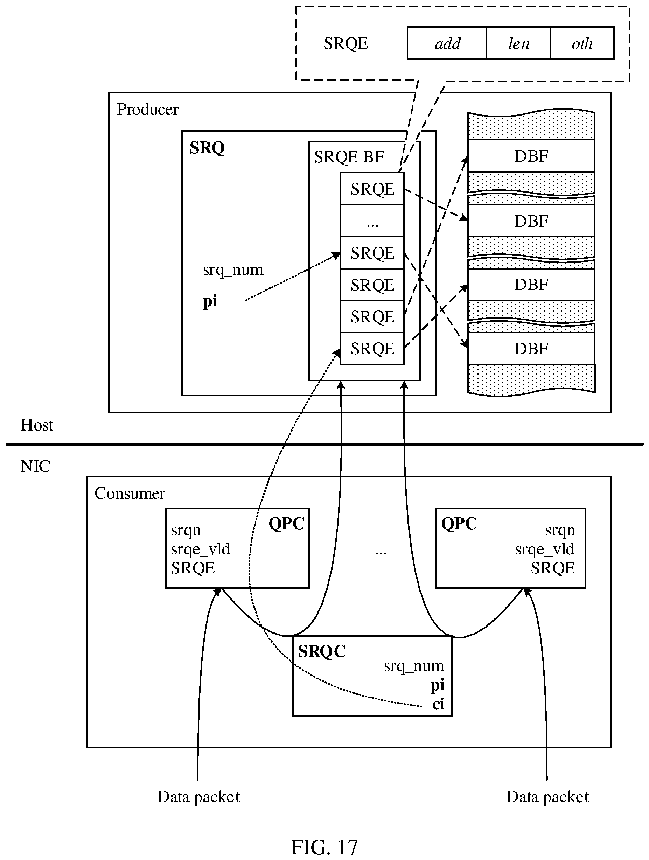

FIG. 17 is a diagram of a structure of another network node according to an embodiment of this application. The network structure includes a host and a NIC. The host and the NIC may be connected through a bus. For example, the bus may include a PCIe bus. For the logic of managing an SRQ by the network node, the host may include a producer, and the NIC may include a consumer. The producer may specifically include a software module (for example, a driver of the NIC) that is in the host and that is configured to manage the SRQ, and the consumer may include a software module and a hardware module that are in the NIC and that are configured to consume the SRQ.

Each SRQ in the producer may include an SRQE BF, a quantity of SRQEs that can be stored in the SRQE BF is represented as srq_num, and the producer manages the SRQE BF by using a production pointer pi and a consumption pointer ci, where pi points to a to-be-produced SRQE, and ci points to a to-be-consumed SRQE. The SRQE BF includes a plurality of SRQEs, each of the plurality of SRQEs corresponds to one data buffer (data buffer, DBF), and the data buffer DBF is used to store a data packet. Optionally, each SRQE may include a base address add of the corresponding data buffer and a length len of the corresponding data buffer, and may further include other information represented as oth.

The consumer includes a QPC of each of a plurality of QPs that share a same SRQ, and the QPC is used to record related information of the corresponding QP. For example, the QPC may include an SRQN, srge_vld, and an SRQE, where the SRQN is a number of an SRQ used by the QP, srqe_vid indicates whether the current QP has an available SRQE, and the SRQE is an SRQE applied for by the current QP. The consumer also includes an SRQC of the SRQ, and the SRQC is used to maintain information required for consuming the SRQ. For example, the SRQC may include srq_num, pi, and ci, where srq_num is a quantity of SRQEs that can be stored in the SRQE BF, pi points to a next to-be-produced SRQE (pi on a host side is latest, and pi on a NIC side may not be latest) producer, and ci points to a next to-be-consumed SRQE. The consumer may further include a cache (cache), and the cache may be used to cache data, for example, used to cache an SRQE in the SRQE BF.

The following describes a specific procedure in which a host initializes an SRQ, a specific procedure in which a NIC consumes an SRQ, a specific procedure in which a NIC prefetches an SRQ, and a specific procedure in which a host produces an SRQ in the queue management method provided in embodiments of this application.

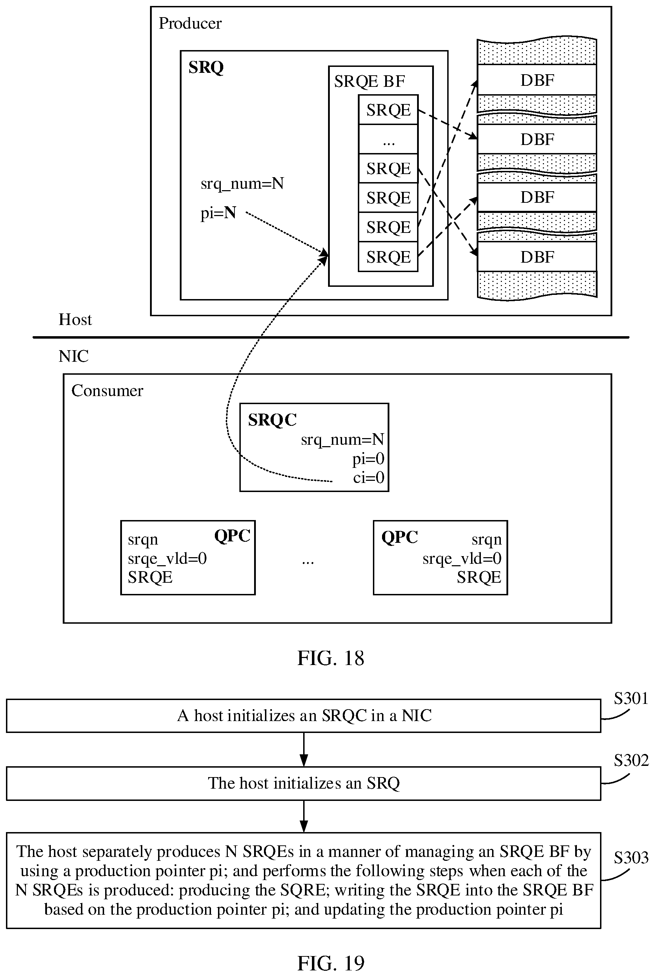

FIG. 18 is a diagram of initializing an SRQ by a host according to an embodiment of this application. The host first configures related parameters of an SRQC to initial values, and then applies for data buffers for a plurality of SRQEs in the SRQ by using a management manner of a production pointer pi, and constructs the corresponding SRQEs until the plurality of SRQEs are constructed. With reference to FIG. 18, as shown in FIG. 19, a specific procedure in which the host initializes the SRQ includes the following steps: S301 to S304.

S301: The host initializes an SRQC in a NIC.

The SRQC may include parameters such as a quantity srq_num of SRQEs that can be stored in a corresponding SRQE BF, the production pointer pi, and a consumption pointer ci.

In a possible embodiment, the host may send initial values of the parameters such as srq_num, pi, and ci to the NIC by using initialization information. When the NIC receives the initialization information, the NIC directly initializes the SRQC based on the initialization information, that is, configures the parameters such as srq_num, pi, and ci in the SRQC to the corresponding initial values.

Alternatively, the host stores the initial values of the foregoing parameters in a memory, and sends a corresponding storage address to the NIC by using the initialization information. When the NIC receives the initialization information, the NIC may read the initial values of the foregoing parameters based on the address, and initialize the SRQC based on the read initial values.

Optionally, an initial value of srq_num is N, an initial value of pi is 0, and an initial value of ci is 0. Initializing the SRQC in the NIC may include: performing the following initialization on the SRQC: srq_num=N, pi=0, and ci=0.

S302: The host initializes the SRQ. In a possible embodiment, the host may initialize parameters such as srq_num and pi that are related to the SRQ and that are on a host side, that is, configure the parameters such as srq_num and pi in the SRQ to corresponding initial values. Optionally, the host performs the following initialization on the related parameters of the SRQ: srq_num=N, and pi=0.

S303: The host separately produces N SRQEs in a manner of managing the SRQE BF by using the production pointer pi.

In a possible embodiment, the following steps are performed when each of the N SRQEs is produced: producing the SQRE; writing the SRQE into the SRQE BF based on the production pointer pi; and updating the production pointer pi.

For ease of understanding, the following uses srq_num=N as an example to describe, by using the following steps S1h to S6h, a specific procedure in which the host initializes the SRQ.

S1h: Initialize an SRQC on a consumer side, where the initialization may specifically include: srq_num=N, pi=0, and ci=0.

S2h: Initialize variables on a producer side, where the initialization may specifically include: srq_num=N, and pi=0.

S3h: The producer determines whether the SRQ is full; and if pi==N, that is, the SRQ is full, initialization of the SRQ is completed, and the procedure is ended; or if pi!=N, that is, if the SRQ is not full, a data buffer is applied for, and "S4h" continues to be performed. For example, when pi=0, a data buffer DBF0 is applied for.

S4h: Construct an SRQE, and write the SRQE into the SRQE BF. Constructing the SRQE may specifically include: constructing the SRQE based on a base address and a length of the data buffer applied for and other information.

S5h: Update pi=pi+1, and return to perform "S3h".

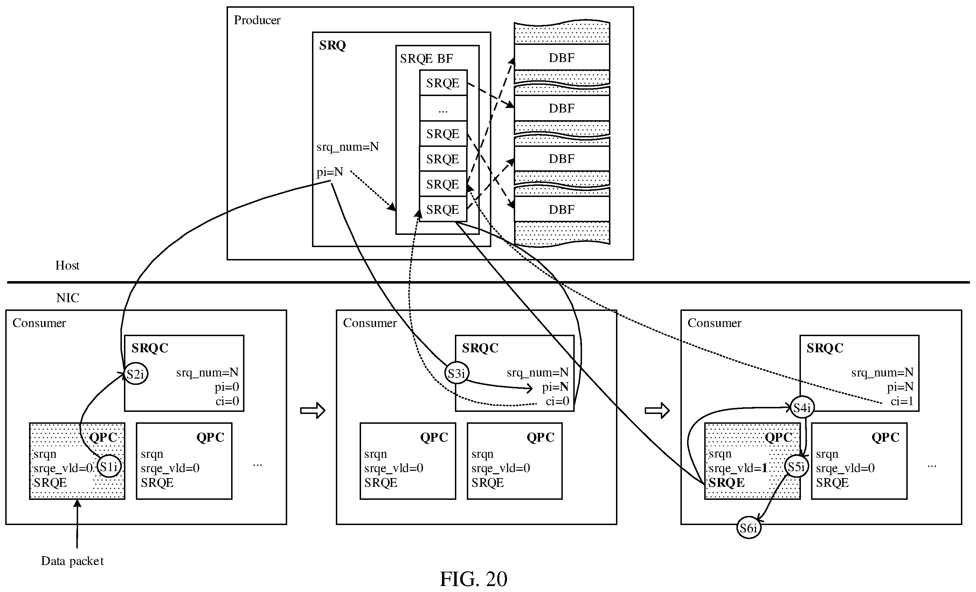

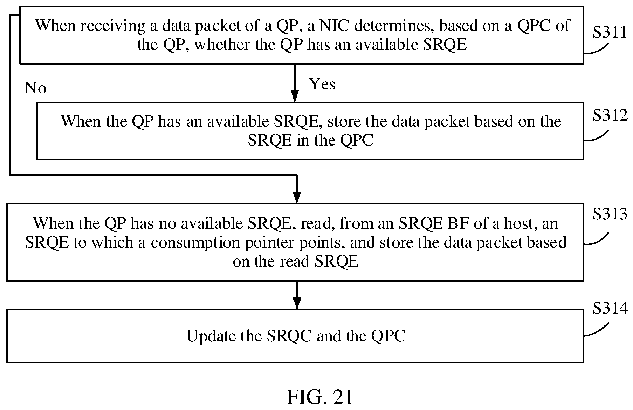

FIG. 20 is a diagram of consuming an SRQ by a NIC according to an embodiment of this application. With reference to FIG. 20, as shown in FIG. 21, when the NIC receives a data packet of a QP, a specific procedure in which the NIC consumes the SRQ includes the following steps: S311 to S314.

S311: When receiving a data packet of a QP, the NIC determines, based on a QPC of the QP, whether the QP has an available SRQE.

In an example, the QPC may include validity information srqe_vld. The validity information srqe_vld may indicate whether there is an available SRQE. For example, when srqe_vld=1, it may indicate that there is an available SRQE; or when srqe_vld=0, it may indicate that there is no available SRQE.

Optionally, the QPC may further include an SRQE. The SRQE is an SRQE allocated to the QP corresponding to the QPC. When the validity information srqe_vld indicates that there is an available SRQE, the SRQE in the QPC is the available SRQE of the QP corresponding to the QPC.

S312: When the QP has an available SRQE, store the data packet based on the SRQE in the QPC.

S313: When the QP has no available SRQE, read, from the SRQE BF in the host, an SRQE to which the consumption pointer ci points, and store the data packet based on the read SRQE.

In a possible embodiment, when the QP has no available SRQE, the NIC may determine whether the production pointer pi and the consumption pointer ci in the SRQC are the same. When the production pointer pi and the consumption pointer ci in the SRQC are different, the NIC performs S213.

For example, the network interface card sends a first request to the host, where the first request carries the consumption pointer ci, and the first request is used to obtain the SRQE corresponding to the consumption pointer ci. When the host receives the first request, the host sends, to the network interface card, the SRQE to which the consumption pointer ci points, so that the network interface card can obtain the corresponding SRQE, and store the data packet based on the SRQE.

S314: Update the SRQC and the QPC. Optionally, after reading the SRQE to which the consumption pointer ci points from the SRQE BF in the host, the NIC may further update the consumption pointer ci in the SRQC and the SRQE and the validity information srqe_vid in the QPC. In an example, the consumer pointer ci in the SRQC is updated based on ci=ci+1, the SRQE in the QPC is updated to the read SRQE, the validity information srqe_vld in the QPC is updated to srqe_vld=1.

Further, the method may further include: When the production pointer pi and the consumption pointer ci in the SRQC are the same, the NIC reads a latest production pointer pi from the host, updates the latest production pointer pi to the SRQC, and then determine whether the updated production pointer pi and the consumption pointer ci in the SRQC are different. If the updated production pointer pi and the consumption pointer ci are the same, the data packet is discarded. If the updated production pointer pi and the consumption pointer ci are different, the SRQE corresponding to ci is read from the host, and the data packet is stored based on the obtained SRQE. Optionally, in a process of reading the SRQE corresponding to ci from the host and storing the data packet, the NIC may further update ci in the SRQC (for example, ci=ci+1), and update srqe_vld and the SRQE in the QPC.

For ease of understanding, the following uses srq_num=N as an example to describe, by using the following steps S1i to S6i, a specific procedure in which the NIC consumes the SRQ.

S1i: The NIC receives a data packet from a network side, and reads a QPC of a QP to which the data packet belongs; and if srqe_vld==1, that is, the current QP has an available SRQE, obtains the SRQE, and performs "S6i"; or if srqe_vld==0, that is, the current QP has no available SRQE, performs "S2i". In FIG. 20, an example in which the QPC is a 1^{st} QPC in the NIC and srqe_vld==0 is used for description.

S2i: Lock the SRQC; determine, based on pi and ci, whether the SRQ is empty; and if ci==pi, that is, the SRQ is empty, read latest pi of the SRQ from the host, and perform "S3i"; or if ci!=pi, that is, the SRQ is not empty, read an index to which ci points in the index ring from the host, and perform "S4i". In FIG. 20, an example in which ci==pi and the latest pi=N of the SRQ is read from the host is used for description.

S3i: Update pi in the SRQC; determine, based on pi and ci, whether the SRQ is empty; and if ci==pi, that is, the SRQ is empty, discard the data packet, perform corresponding processing after the packet is discarded, and end the procedure; or if ci!=pi, that is, the SRQ is not empty, read the SRQE to which ci points in the SRQE BF from the host, and perform "S4i". In FIG. 20, an example in which pi in the SRQC is updated to pi=N, ci! after the update is equal to pi, and the SRQE to which ci points in the SRQE BF and that is read from the host is a 0^{th} SRQE is used for description.

S4i: Read the SRQE to which ci points, allocate the read SRQE to the QP that applies for the SRQE, update the SRQC, and release an SRQC lock: ci=ci+1. In FIG. 20, an example in which "the 0^{th} SRQE" is allocated to a QP corresponding to a 1^{st} QPC in the NIC and ci in the SRQC is updated to ci=1 is used for description.

S5i: Update the QPC, and perform "S6i": QPC.srqe_vld=1; and QPC.SRQE=the read SRQE. In FIG. 20, an example in which srqe_vld in the 1^{st} QPC in the NIC is updated to srqe_vld=1 and the SRQE is updated to the 0^{th} SRQE is used for description.

S6i: Write the data packet into the SRQE to which the SRQE in the QPC points, update the QPC, and end the procedure. Updating the QPC may include: if the SRQE is not used up, keeping srqe_vld=1; or if the SRQE is used up, setting srqe_vid to 0, and reporting the SRQE in the QPC to the host through an event.

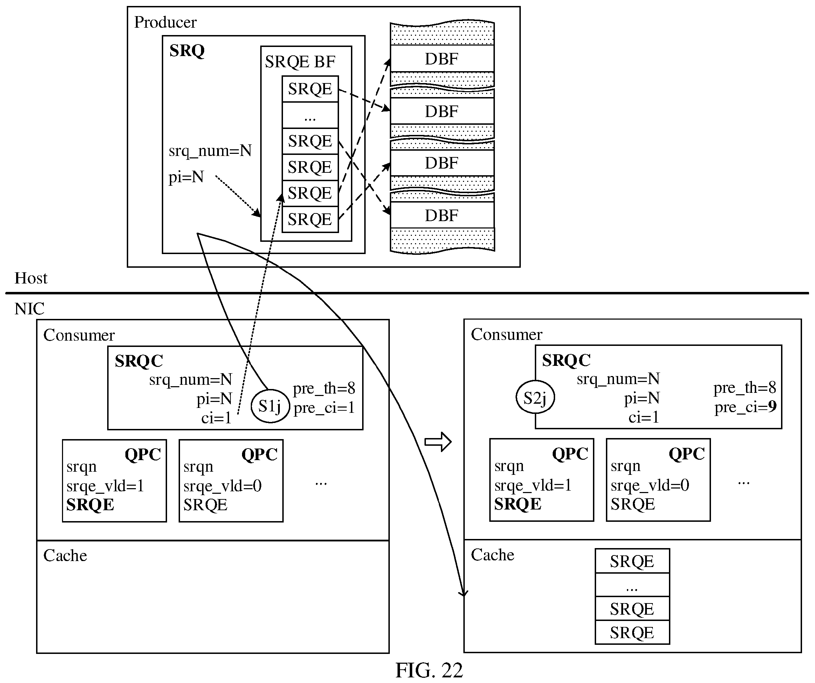

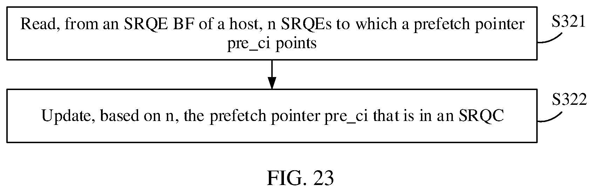

FIG. 22 is a diagram of prefetching an SRQ by a NIC according to an embodiment of this application. In the foregoing procedure in which the NIC consumes the SRQ, each time the NIC reads data from the host, a round trip time RTT is required. For example, a PCIe bus is used between the NIC and the host, and a typical RTT is 1 µs. To improve NIC performance, the NIC usually has a prefetch mechanism. To be specific, before next consumption, some consumed data is retrieved from the host to the NIC in advance and cached in the NIC. In this way, when the NIC consumes the SRQE, the SRQE can be directly hit in a cache of the NIC. With reference to FIG. 22, as shown in FIG. 23, a specific procedure in which the NIC prefetches the SRQ includes the following steps: S321 and S322.

S321: The NIC reads, from an SRQE BF in the host, n SRQEs to which a prefetch pointer pre_ci points.

The n SRQEs may include one or more SRQEs, that is, a value of n may be equal to 1 or greater than 1. Optionally, an SRQC further includes a prefetch quantity pre_th and the prefetch pointer pre_ci.

In a possible embodiment, when the prefetch pointer pre_ci in the SRQC is different from a production pointer pi in the SRQC, and a difference between the prefetch pointer pre_ci in the SRQC and a consumer pointer ci in the SRQC is less than the prefetch quantity pre_th, the NIC reads, from the SRQE BF in the host, the n SRQEs to which the prefetch pointer pre_ci points.

For example, the NIC sends a second request to the host, where the second request carries the prefetch pointer pre_ci, and the second request is used to obtain the n SRQEs corresponding to the prefetch pointer pre_ci. When the host receives the second request, the host sends, to the NIC, the n SRQEs to which the prefetch pointer pre_ci points.

S322: The NIC updates the prefetch pointer pre_ci in the SRQC based on n. Optionally, the NIC determines a sum of pre_ci and n as updated pre_ci.

Optionally, the NIC may concurrently prefetch the SRQEs from the SRQE BF in the host by using S321 and S322, to further improve SRQ performance.

For ease of understanding, the following uses srq_num=N, pi=N, pre_th=8, ci=1, and pre_ci=1 as an example to describe, by using the following steps S1j and S2j, a specific procedure in which the NIC prefetches the SRQ. Herein, pre_ci points to an SRQE to be prefetched by the NIC, and pre_th indicates a maximum value of an index that can be prefetched.

S1j: Determine whether a prefetch can be initiated; and if pre_ci==pi, that is, all SRQEs produced by the host have been prefetched to the cache of the NIC, stop the prefetch and end the procedure; or if (pre_ci-ci)≥pre_th, that is, the prefetch quantity has reached the maximum value, stop the prefetch and end the procedure; otherwise, sequentially prefetch the n SRQEs to which pre_ci points from the SRQE BF in the host, where n is a positive integer and is less than or equal to pre_th. In FIG. 22, an example in which pre_ci is not equal to pi, a difference between pre_ci and ci is less than pre_th, and the NIC sequentially prefetches eight SRQEs (that is, n=8) from the SRQE BF in the host is used for description.

S2j: Update the SRQC, and return to perform "S1j": pre_ci+=n. In FIG. 22, an example in which n=8 and updated pre_ci in the SRQC is equal to 9 is used for description.

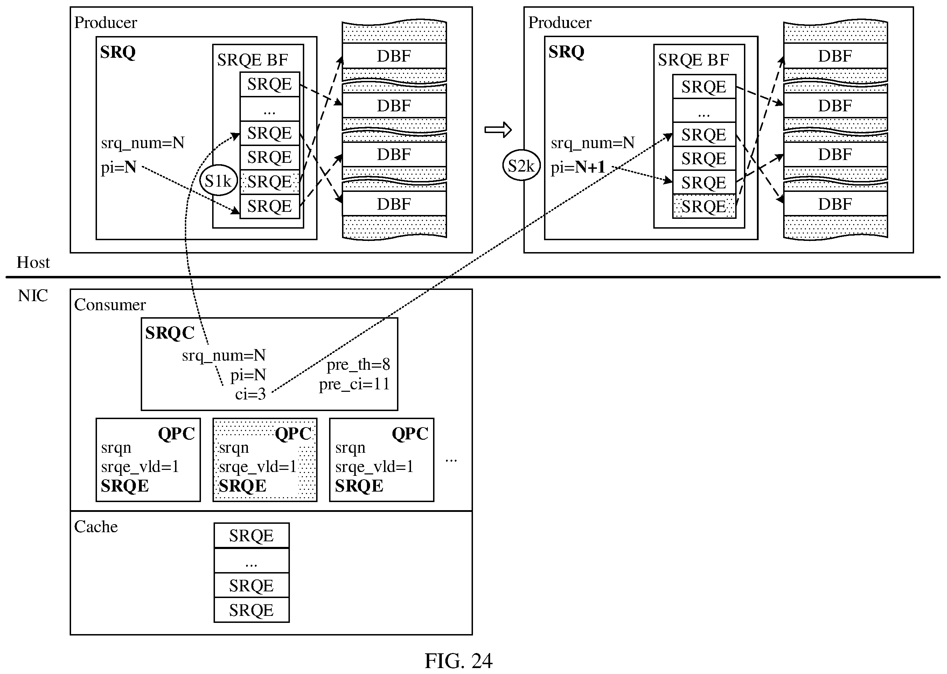

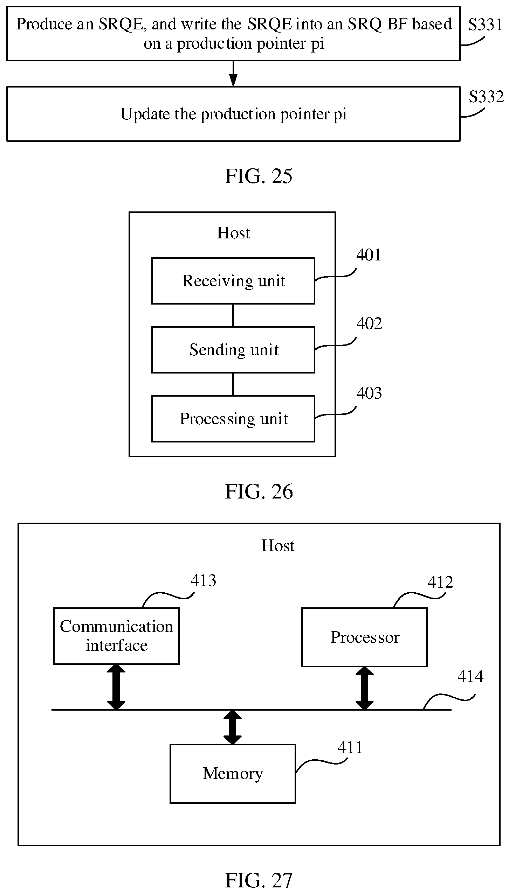

FIG. 24 is a diagram of producing an SRQ by a host according to an embodiment of this application. When receiving a completion event indicating an SRQE, the host obtains the reported SRQE in the completion event, and upper-layer software running on the host uses data in a data buffer corresponding to the SRQE, and indicates the host to re-produce an SRQE after the SRQE is reclaimed. With reference to FIG. 24, as shown in FIG. 25, a specific procedure in which the host produces the SRQ includes the following steps: S331 to S333.

S331: Produce an SRQE, and write the SRQE into an SRQ BF based on a production pointer pi.

S332: Update the production pointer pi. Optionally, updating the production pointer pi may include: pi=pi+1.

For ease of understanding, the following uses srq_num=N, pi=N, pre_th=8, ci=3, and pre_ci=11 as an example to describe, by using the following steps S1k and S2k, a specific procedure in which the host produces the SRQ.

S1k: Produce an idle SRQE, and store the SRQE in the SRQE BF to which pi points. In FIG. 24, an example in which the reported SRQE is specifically a 1^{st} SRQE is used for description. In FIG. 24, an example in which the reported SRQE is an SRQE in a 2^{nd} QPC in the NIC and is consumed is used for description.

S2k: Update pi=pi+1, and end the procedure. In FIG. 24, an example in which updated pi=N+1 is used for description.

In the queue management method provided in this embodiment of this application, the host may manage the plurality of SRQEs in the SRQE BF by using the production pointer pi and the consumption pointer ci, the production pointer pi points to the to-be-produced SRQE, and the consumption pointer ci points to the to-be-consumed SRQE. The NIC may consume and prefetch, for consumption, the plurality of SRQEs in the SRQE BF by using the consumption pointer ci, and can obtain a plurality of SRQEs through one prefetch. In this way, when the NIC needs to consume an SRQE subsequently, the NIC can directly read the SRQE from the cache for use. This improves SRQ performance.

The foregoing mainly describes the solutions provided in embodiments of this application from perspectives of a host and a network interface card. It may be understood that, to implement the foregoing functions, the host and the network interface card include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the host and the network interface card may be divided into functional modules based on the foregoing method examples. For example, each functional module may be obtained through division based on each corresponding function, or two or more functions may be integrated into one processing module. The functional module may be implemented in a form of hardware, or may be implemented in a form of a software functional module. It should be noted that, in embodiments of this application, module division is an example, and is merely a logical function division. During actual implementation, another division manner may be used. The following uses division of each functional module based on a corresponding function as an example for description.

When an integrated unit is used, FIG. 26 is a diagram of a possible structure of a queue management apparatus in the foregoing embodiments. The apparatus may be a host or a chip built in a host. The apparatus includes a receiving unit 401, a sending unit 402, and a processing unit 403.

In a possible embodiment, the processing unit 403 is configured to support the apparatus in performing one or more steps in S201 to S203, S231, S232, and the like in the foregoing embodiments. The receiving unit 401 is configured to support the apparatus in performing the step of receiving the request for obtaining the first index, the request for obtaining the SRQE corresponding to the first index, the request for prefetching the n indexes, and the like in S213 in the foregoing method embodiments. The sending unit 402 is configured to support the apparatus in performing one or more steps of sending the first index, the SRQE corresponding to the first index, the latest consumption pointer, the n indexes, and the like to the network interface card in the foregoing method embodiments.

In another possible embodiment, the processing unit 403 is configured to support the apparatus in performing one or more steps in S301 to S303, S331, S332, and the like in the foregoing embodiments. The receiving unit 401 is configured to support the apparatus in performing the step of receiving the request for obtaining the SRQE, the request for prefetching the n SRQEs, and the like in S313 in the foregoing method embodiments. The sending unit 402 is configured to support the apparatus in performing one or more steps of sending the SRQE, the latest consumption pointer, the n SRQEs, and the like to the network interface card in the foregoing method embodiments.

All related content of the steps in the method embodiments may be cited in function descriptions of the corresponding function modules. Details are not described herein again.

Based on hardware implementation, the processing unit 403 may be a processor, the receiving unit 401 may be a receiver, and the sending unit 402 may be a transmitter. The receiver and the transmitter may be integrated into a transceiver, and the transceiver may also be referred to as a communication interface.

FIG. 27 is a diagram of a possible structure of a queue management apparatus according to an embodiment of this application. The queue management apparatus may be a host or a chip built in a host. The apparatus includes a memory 411 and a processor 412. The memory 411 is configured to store program code and data of the apparatus, and the processor 412 is configured to control an action of the host in the foregoing method embodiments. For example, the processor 412 is configured to perform one or more steps in S301 to S303, S331, S332, and the like in the foregoing method embodiments, or perform one or more steps in S301 to S303, S331, S332, and the like in the foregoing embodiments, and/or another process of the technology described in this specification. Optionally, the queue management apparatus may further include a communication interface 413. The communication interface 413 is configured to support the apparatus in performing the step of communicating with the network interface card in the foregoing method embodiments.

The processor 412 may be a central processing unit, a general-purpose processor, a digital signal processor, an application-specific integrated circuit, a processing chip, a field programmable gate array or another programmable logic device, a transistor logic device, a hardware component, or any combination thereof. The processor may implement or execute various logical blocks, modules, and circuits described with reference to content disclosed in embodiments of this application. Alternatively, the processor 412 may be a combination implementing a computing function, for example, a combination of one or more microprocessors, or a combination of a digital signal processor and a microprocessor. The communication interface 413 may be a transceiver, a transceiver circuit, a transceiver interface, or the like. The memory 411 may be a volatile memory, a non-volatile memory, or the like.

For example, the communication interface 413, the processor 412, and the memory 411 are connected to each other through a bus 414. The bus 414 may be a peripheral component interconnect (peripheral component interconnect, PCI) bus, an extended industry standard architecture (extended industry standard architecture, EISA) bus, or the like. The bus 414 may be classified into an address bus, a data bus, a control bus, and the like. For ease of representation, only one thick line is used to represent the bus in the figure, but this does not mean that there is only one bus or only one type of bus.

Optionally, the memory 411 may be included in the processor 412.

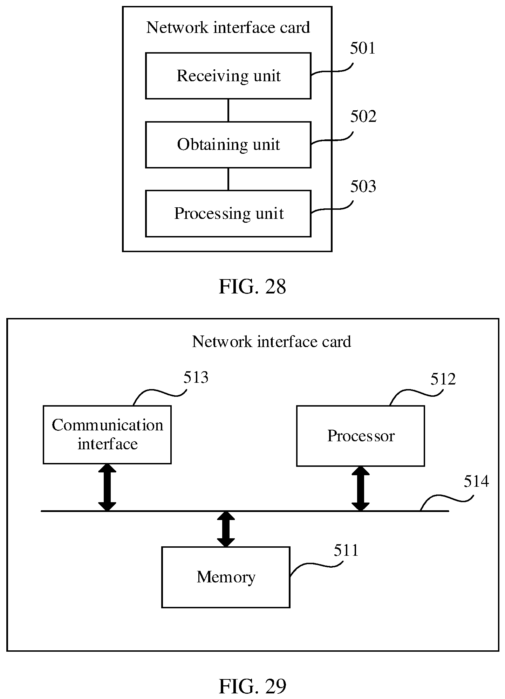

When an integrated unit is used, FIG. 28 is a diagram of a possible structure of a queue management apparatus in the foregoing embodiments. The apparatus may be a network interface card, and the apparatus includes a receiving unit 501, an obtaining unit 502, and a processing unit 503.

In a possible embodiment, the processing unit 503 is configured to support the apparatus in performing one or more steps in S211, S212, S214, S222, and the like in the foregoing embodiments. The receiving unit 501 is configured to support the apparatus in performing the step of receiving the data packet in the foregoing method embodiments. The obtaining unit 502 is configured to support the apparatus in performing one or more steps of obtaining the first index, the SRQE corresponding to the first index, the latest consumption pointer, the n indexes, and the like from the host in the foregoing method embodiments.

In another possible embodiment, the processing unit 503 is configured to support the apparatus in performing one or more steps in S311, S312, S314, and the like in the foregoing embodiments. The receiving unit 501 is configured to support the apparatus in performing the step of receiving the data packet in the foregoing method embodiments. The obtaining unit 502 is configured to support the apparatus in performing one or more steps of obtaining the SRQE, the latest consumption pointer, the n SRQEs, and the like from the host in the foregoing method embodiments.

All related content of the steps in the method embodiments may be cited in function descriptions of the corresponding function modules. Details are not described herein again.

Based on hardware implementation, the processing unit 503 may be a processor, the receiving unit 501 may be a receiver, and the obtaining unit 502 may have functions of a transmitter and a receiver. The receiver and the transmitter may be integrated into a transceiver, and the transceiver may also be referred to as a communication interface.

FIG. 29 is a diagram of a possible structure of a queue management apparatus according to an embodiment of this application. The queue management apparatus may be a network interface card. The apparatus includes a memory 511 and a processor 512. The memory 511 is configured to store program code and data of the apparatus, and the processor 512 is configured to control an action of the network interface card in the foregoing method embodiments. For example, the processor 512 is configured to perform one or more steps in S211, S212, S214, S222, and the like in the foregoing method embodiments, or perform one or more steps in S311, S312, S314, and the like in the foregoing embodiments, and/or another process of the technology described in this specification. Optionally, the queue management apparatus may further include a communication interface 513. The communication interface 513 is configured to support the apparatus in performing the step of communicating with the host in the foregoing method embodiments.

The processor 512 may be a central processing unit, a general-purpose processor, a digital signal processor, an application-specific integrated circuit, a processing chip, a field programmable gate array or another programmable logic device, a transistor logic device, a hardware component, or any combination thereof. The processor may implement or execute various logical blocks, modules, and circuits described with reference to content disclosed in embodiments of this application. Alternatively, the processor 512 may be a combination implementing a computing function, for example, a combination of one or more microprocessors, or a combination of a digital signal processor and a microprocessor. The communication interface 513 may be a transceiver, a transceiver circuit, a transceiver interface, or the like. The memory 511 may be a volatile memory, a non-volatile memory, or the like.

For example, the communication interface 513, the processor 512, and the memory 511 are connected to each other through a bus 514. The bus 514 may be a PCI bus, an EISA bus, or the like. The bus 514 may be classified into an address bus, a data bus, a control bus, and the like. For ease of representation, only one thick line is used to represent the bus in the figure, but this does not mean that there is only one bus or only one type of bus.

Optionally, the memory 511 may be included in the processor 512.

All or some of the methods provided in embodiments of this application may be implemented by using software, hardware, or a combination thereof. When software is used for implementation, all or some of the methods may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, a network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, or microwave) manner. The computer-readable storage medium may be any medium accessible by the computer, or a data storage device, such as a server or a data center, integrating one or more media. The medium may be a magnetic medium (for example, a floppy disk, a hard disk, or a magnetic tape), an optical medium (for example, an optical disc), a semiconductor medium (for example, a solid-state drive (SSD)), or the like.

According to another aspect of this application, a computer-readable storage medium is provided. The computer-readable storage medium includes computer instructions. When the computer instructions are run by a device, the device is enabled to perform the steps of the host in the queue management method provided in the foregoing method embodiments.

According to another aspect of this application, a computer-readable storage medium is provided. The computer-readable storage medium includes computer instructions. When the computer instructions are run by a device, the device is enabled to perform the steps of the network interface card in the queue management method provided in the foregoing method embodiments.

According to another aspect of this application, a network node is provided. The network node includes any host provided above and any network interface card provided above. The host is configured to perform the steps of the host in the queue management method provided in the foregoing method embodiments. The network interface card is configured to perform the steps of the network interface card in the queue management method provided in the foregoing method embodiments.

According to another aspect of this application, a communication network is provided. The communication network includes one or more network nodes. The network node includes the host and the network interface card provided above, and may be configured to perform the queue management method provided in the foregoing method embodiments.

According to another aspect of this application, a computer program product including instructions is provided. When the computer program product runs on a computer, the computer is enabled to perform the steps of the host in the queue management method provided in the foregoing method embodiments.

According to another aspect of this application, a computer program product including instructions is provided. When the computer program product runs on a computer, the computer is enabled to perform the steps of the network interface card in the queue management method provided in the foregoing method embodiments.

Finally, it should be noted that the foregoing descriptions are merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A queue management method, applied to a host, wherein the host comprises a shared receive queue SRQ and a plurality of queue pairs QPs that share the SRQ, the SRQ comprises a plurality of shared receive queue elements SRQEs, the host manages the plurality of SRQEs based on a production pointer and a consumption pointer, the production pointer is used to determine a to-be-produced SRQE, the consumption pointer is used to determine a to-be-consumed SRQE, and the method comprises:
receiving, by the host, a first request from a network interface card, wherein the first request carries the consumption pointer and is used to obtain the SRQE corresponding to the consumption pointer; the first request is sent by the network interface card when the network interface card receives a first data packet of a first QP in the plurality of QPs and determines, based on validity information in a first QPC, that there is no available SRQE, and the production pointer and the consumption pointer that are in an SRQC are different; the first QPC is a context of the first QP; and the SRQC is a context of the SRQ; and
sending, by the host, the SRQE corresponding to the consumption pointer to the network interface card, wherein the SRQE corresponding to the consumption pointer is used to store the first data packet.

2. The method according to claim 1, wherein the method further comprises:
sending, by the host, a latest production pointer to the network interface card, wherein the production pointer is used to update the production pointer in the SRQC.

3. The method according to claim 1 or 2, wherein the host further comprises an index ring for storing indexes of the plurality of SRQEs, the production pointer points to an index of the to-be-produced SRQE, the consumption pointer points to an index of the to-be-consumed SRQE, and the method further comprises:
sending, by the host to the network interface card, a first index to which the consumption pointer points in the index ring, wherein the first index is the index of the SRQE corresponding to the consumption pointer.

4. The method according to claim 3, wherein the method further comprises:
receiving, by the host, a second request from the network interface card, wherein the second request is used to obtain n indexes to which a prefetch pointer points in the index ring, n is a positive integer, the second request is sent by the network interface card when the network interface card determines that a preset condition is met, and the preset condition comprises: the prefetch pointer in the SRQC is different from the production pointer in the SRQC, and a difference between the prefetch pointer in the SRQC and the consumption pointer in the SRQC is less than a prefetch quantity in the SRQC; and
sending, by the host, the n indexes to the network interface card.

5. The method according to claim 3 or 4, wherein the method further comprises:
producing, by the host, a second SRQE when consumption of an SRQE is completed;
caching, by the host, the second SRQE in the SRQ based on an index of the consumed SRQE; and
writing, by the host, the index of the consumed SRQE into the index ring as an index of the second SRQE based on the production pointer, and updating the production pointer.

6. The method according to claim 1 or 2, wherein the method further comprises:
receiving, by the host, a second request from the network interface card, wherein the second request is used to obtain n SRQEs to which a prefetch pointer points in the SRQ, n is a positive integer, the second request is sent by the network interface card when the network interface card determines that a preset condition is met, and the preset condition comprises: the prefetch pointer in the SRQC is different from the production pointer in the SRQC, and a difference between the prefetch pointer in the SRQC and the consumption pointer in the SRQC is less than a prefetch quantity in the SRQC; and
sending, by the host, the n SRQEs to the network interface card.

7. The method according to claim 6, wherein the method further comprises:
producing, by the host, a second SRQE when consumption of an SRQE is completed; and
writing, by the host, the second SRQE into the SRQ based on the production pointer, and updating the production pointer.

8. A queue management method, applied to a network interface card, wherein the network interface card comprises a context SRQC of a shared receive queue SRQ and contexts QPCs of a plurality of QPs that share the SRQ, the SRQC comprises a production pointer and a consumption pointer, the production pointer is used to determine a to-be-produced SRQE, the consumption pointer is used to determine a to-be-consumed SRQE, and the method comprises:
receiving, by the network interface card, a first data packet, wherein the first data packet is a data packet of a first QP in the plurality of QPs, the first QP corresponds to a first QPC, and the first QPC comprises validity information;
when the validity information in the first QPC indicates that there is no available SRQE, and the production pointer and the consumption pointer in the SRQC are different, obtaining, by the network interface card, the SRQE corresponding to the consumption pointer in the SRQC based on the consumption pointer; and
storing, by the network interface card, the first data packet based on the obtained SRQE.

9. The method according to claim 8, wherein the method further comprises:
reading, by the network interface card, a latest production pointer from a host, and updating the production pointer in the SRQC based on the latest production pointer.

10. The method according to claim 8 or 9, wherein indexes of the plurality of SRQEs are stored in an index ring, the production pointer points to an index of the to-be-produced SRQE, the consumption pointer points to an index of the to-be-consumed SRQE, the first QPC further comprises an index, and obtaining, by the network interface card based on the consumption pointer in the SRQC, the SRQE to which the consumption pointer points comprises:
reading, by the network interface card from the host based on the consumption pointer in the SRQC, a first index to which the consumption pointer points in the index ring; and
reading, by the network interface card, a first SRQE corresponding to the first index from the host.

11. The method according to claim 10, wherein after reading, from the host, the first index to which the consumption pointer points in the index ring, the method further comprises:
updating, by the network interface card, the validity information and the index in the first QPC based on the first index; and
updating, by the network interface card, the consumption pointer in the SRQC.

12. The method according to claim 10 or 11, wherein the SRQC further comprises a prefetch pointer, and the method further comprises:
when a preset condition is met, reading, by the network interface card from the host, n indexes to which the prefetch pointer points in the index ring, and storing the n indexes in a cache, wherein n is a positive integer, the SRQC further comprises a prefetch quantity, and the preset condition comprises: the prefetch pointer in the SRQC is different from the production pointer in the SRQC, and a difference between the prefetch pointer in the SRQC and the consumption pointer in the SRQC is less than the prefetch quantity; and
updating, by the network interface card, the prefetch pointer in the SRQC based on n.

13. The method according to claim 8 or 9, wherein the production pointer points to the to-be-produced SRQE, the consumption pointer points to the to-be-consumed SRQE, the first QPC further comprises an SRQE, and obtaining, by the network interface card based on the consumption pointer in the SRQC, the SRQE to which the consumption pointer points comprises:
reading, by the network interface card from the host based on the consumption pointer in the SRQC, a first SRQE to which the consumption pointer points.

14. The method according to claim 13, wherein after reading, from the host, the first SRQE to which the consumption pointer points, the method further comprises:
updating, by the network interface card, the validity information and the SRQE in the first QPC based on the first SRQE; and
updating, by the network interface card, the consumption pointer in the SRQC.

15. The method according to claim 13 or 14, wherein the SRQC further comprises a prefetch pointer, and the method further comprises:
when a preset condition is met, reading, by the network interface card from the host, n SRQEs to which the prefetch pointer points in the SRQ, and storing the n SRQEs in a cache, wherein n is a positive integer, the SRQC further comprises a prefetch quantity, and the preset condition comprises: the prefetch pointer in the SRQC is different from the production pointer in the SRQC, and a difference between the prefetch pointer in the SRQC and the consumption pointer in the SRQC is less than the prefetch quantity; and
updating, by the network interface card, the prefetch pointer in the SRQC based on n.

16. A queue management apparatus, wherein the apparatus comprises a shared receive queue SRQ and a plurality of queue pairs QPs that share the SRQ, the SRQ comprises a plurality of shared receive queue elements SRQEs, the apparatus manages the plurality of SRQEs based on a production pointer and a consumption pointer, the production pointer is used to determine a to-be-produced SRQE, the consumption pointer is used to determine a to-be-consumed SRQE, and the apparatus comprises:
a receiving unit, configured to receive a first request from a network interface card, wherein the first request carries the consumption pointer and is used to obtain the SRQE corresponding to the consumption pointer; the first request is sent by the network interface card when the network interface card receives a first data packet of a first QP in the plurality of QPs and determines, based on validity information in a first QPC, that there is no available SRQE, and the production pointer and the consumption pointer that are in an SRQC are different; the first QPC is a context of the first QP; and the SRQC is a context of the SRQ; and
a sending unit, configured to send the SRQE corresponding to the consumption pointer to the network interface card, wherein the SRQE corresponding to the consumption pointer is used to store the first data packet.

17. The apparatus according to claim 16, wherein the sending unit is further configured to:
send a latest production pointer to the network interface card, wherein the production pointer is used to update the production pointer in the SRQC.

18. The apparatus according to claim 16 or 17, wherein the apparatus further comprises an index ring for storing indexes of the plurality of SRQEs, the production pointer points to an index of the to-be-produced SRQE, the consumption pointer points to an index of the to-be-consumed SRQE, and the sending unit is further configured to:
send, to the network interface card, a first index to which the consumption pointer points in the index ring, wherein the first index is the index of the SRQE corresponding to the consumption pointer.

19. The apparatus according to claim 18, wherein
the receiving unit is further configured to receive a second request from the network interface card, wherein the second request is used to obtain n indexes to which a prefetch pointer points in the index ring, n is a positive integer, the second request is sent by the network interface card when the network interface card determines that a preset condition is met, and the preset condition comprises: the prefetch pointer in the SRQC is different from the production pointer in the SRQC, and a difference between the prefetch pointer in the SRQC and the consumption pointer in the SRQC is less than a prefetch quantity in the SRQC; and
the sending unit is further configured to send the n indexes to the network interface card.

20. The apparatus according to claim 18 or 19, wherein the apparatus further comprises:
a processing unit, configured to produce a second SRQE when consumption of an SRQE is completed, wherein
the processing unit is further configured to cache the second SRQE in the SRQ based on an index of the consumed SRQE; and
the processing unit is further configured to: write the index of the consumed SRQE into the index ring as an index of the second SRQE based on the production pointer, and update the production pointer.

21. The apparatus according to claim 16 or 17, wherein
the receiving unit is further configured to receive a second request from the network interface card, wherein the second request is used to obtain n SRQEs to which a prefetch pointer points in the SRQ, n is a positive integer, the second request is sent by the network interface card when the network interface card determines that a preset condition is met, and the preset condition comprises: the prefetch pointer in the SRQC is different from the production pointer in the SRQC, and a difference between the prefetch pointer in the SRQC and the consumption pointer in the SRQC is less than a prefetch quantity in the SRQC; and
the sending unit is further configured to send the n SRQEs to the network interface card.

22. The apparatus according to claim 21, wherein the apparatus further comprises:
a processing unit, configured to produce a second SRQE when consumption of an SRQE is completed, wherein
the processing unit is further configured to: write the second SRQE into the SRQ based on the production pointer, and update the production pointer.

23. A queue management apparatus, wherein the apparatus comprises a context SRQC of a shared receive queue SRQ and contexts QPCs of a plurality of QPs that share the SRQ, the SRQC comprises a production pointer and a consumption pointer, the production pointer is used to determine a to-be-produced SRQE, the consumption pointer is used to determine a to-be-consumed SRQE, and the apparatus comprises:
a receiving unit, configured to receive a first data packet, wherein the first data packet is a data packet of a first QP in the plurality of QPs, the first QP corresponds to a first QPC, and the first QPC comprises validity information;
an obtaining unit, configured to: when the validity information in the first QPC indicates that there is no available SRQE, and the production pointer and the consumption pointer in the SRQC are different, obtain the SRQE corresponding to the consumption pointer in the SRQC based on the consumption pointer; and
a processing unit, configured to store the first data packet based on the obtained SRQE.

24. The apparatus according to claim 23, wherein
the obtaining unit is further configured to read a latest production pointer from a host; and
the processing unit is further configured to update the production pointer in the SRQC based on the latest production pointer.

25. The apparatus according to claim 23 or 24, wherein indexes of the plurality of SRQEs are stored in an index ring, the production pointer points to an index of the to-be-produced SRQE, the consumption pointer points to an index of the to-be-consumed SRQE, the first QPC further comprises an index, and the obtaining unit is further configured to:
read, from the host based on the consumption pointer in the SRQC, a first index to which the consumption pointer points in the index ring; and
read a first SRQE corresponding to the first index from the host.

26. The apparatus according to claim 25, wherein the processing unit is further configured to:
update the validity information and the index in the first QPC based on the first index; and
update the consumption pointer in the SRQC.

27. The apparatus according to claim 25 or 26, wherein the SRQC further comprises a prefetch pointer; and the apparatus further comprises:
the obtaining unit is further configured to: when a preset condition is met, read, from the host, n indexes to which the prefetch pointer points in the index ring, wherein n is a positive integer, the SRQC further comprises a prefetch quantity, and the preset condition comprises: the prefetch pointer in the SRQC is different from the production pointer in the SRQC, and a difference between the prefetch pointer in the SRQC and the consumption pointer in the SRQC is less than the prefetch quantity; and
the processing unit is further configured to: store the n indexes in a cache, and update the prefetch pointer in the SRQC based on n.

28. The apparatus according to claim 23 or 24, wherein the production pointer points to the to-be-produced SRQE, the consumption pointer points to the to-be-consumed SRQE, the first QPC further comprises an SRQE, and the obtaining unit is further configured to:
read, from the host based on the consumption pointer in the SRQC, a first SRQE to which the consumption pointer points.

29. The apparatus according to claim 28, wherein the processing unit is further configured to:
update the validity information and the SRQE in the first QPC based on the first SRQE; and
update the consumption pointer in the SRQC.

30. The apparatus according to claim 28 or 29, wherein the SRQC further comprises a prefetch pointer;
the obtaining unit is further configured to: when a preset condition is met, read, from the host, n SRQEs to which the prefetch pointer points in the SRQ, wherein n is a positive integer, the SRQC further comprises a prefetch quantity, and the preset condition comprises: the prefetch pointer in the SRQC is different from the production pointer in the SRQC, and a difference between the prefetch pointer in the SRQC and the consumption pointer in the SRQC is less than the prefetch quantity; and
the processing unit is further configured to: store the n SRQEs in a cache, and update the prefetch pointer in the SRQC based on n.

31. A queue management apparatus, wherein the queue management apparatus comprises a processor and a memory, the memory stores instructions, and when the processor runs the instructions, the apparatus is enabled to perform the queue management method according to any one of claims 1 to 7.

32. A queue management apparatus, wherein the queue management apparatus comprises a processor and a memory, the memory stores instructions, and when the processor runs the instructions, the apparatus is enabled to perform the queue management method according to any one of claims 8 to 15.

33. A network node, wherein the network node comprises a host and a network interface card, the host comprises the queue management apparatus according to any one of claims 16 to 22 or claim 31, and the network interface card comprises the queue management apparatus according to any one of claims 23 to 30 or claim 32.

34. A computer-readable storage medium, wherein the computer-readable storage medium stores instructions, and when the instructions are executed by a device, the device is enabled to perform the queue management method according to any one of claims 1 to 15.
